# FASCICULE DE BREVET EUROPEEN

(11) **EP 3 770 514 B1**
(45) Date de publication et mention de la délivrance du brevet: **23.03.2022**
(21) Numéro de dépôt: 20184385.1
(22) Date de dépôt: 07.07.2020
(51) Int. Cl.: F25B 41/24, F25B 41/40, F24D 12/02, F24D 19/10, F24H 4/02, F25B 13/00

(54) **MACHINE THERMODYNAMIQUE DE TYPE POMPE À CHALEUR À CYCLE RÉVERSIBLE MULTISOURCES ET PROCÉDÉ DE FONCTIONNEMENT**
THEROMODYNAMISCHE MASCHINE VOM TYP REVERSIBLE MEHRFACHQUELLEN-WÄRMEPUMPE, UND IHR BETRIEBSVERFAHREN
THERMODYNAMIC MACHINE SUCH AS A HEAT PUMP WITH MULTISOURCE REVERSIBLE CYCLE AND OPERATING METHOD

(30) Priorité: 26.07.2019 FR 1908504
(43) Date de publication de la demande: 27.01.2021
(73) Titulaire: X-Terma, 38240 Meylan (FR)
(72) Inventeur: SEGUIN, Bruno, 38240 MEYLAN (FR)
(74) Mandataire: Talbot, Alexandre

(56) Documents cités:
- EP-A1- 2 863 154
- FR-A1- 2 886 388
- JP-A- 2012 141 113

## Description

### Domaine technique

L'invention a pour domaine les installations de production d'énergie calorifique et frigorifique par cycle thermodynamique, par exemple pour satisfaire les besoins de chauffage, de rafraîchissement, et de production d'eau chaude sanitaire, dans les secteurs du bâtiment et de l'industrie ainsi que les procédés de fonctionnement de telles installations.

Plus particulièrement, l'invention a pour domaine les machines thermodynamiques multisources, aptes à échanger de l'énergie thermique avec au moins deux sources externes différentes, par exemple l'air ambiant et le sous-sol. L'invention concerne une machine à cycle réversible, assurant alternativement la fourniture d'énergie calorifique ou la fourniture d'énergie frigorifique à un consommateur d'énergie thermique, tout en échangeant de l'énergie thermique avec l'une ou l'autre de ces deux sources, ou avec les deux.

### Technique antérieure

Les pompes à chaleur, à cycle réversible, fournissent alternativement de l'énergie calorifique ou frigorifique à un consommateur d'énergie thermique, tout en puisant une partie de cette énergie calorifique ou frigorifique à une source externe. Le consommateur d'énergie thermique est défini comme un ou plusieurs éléments absorbant de l'énergie calorifique ou de l'énergie frigorifique par l'intermédiaire d'un fluide caloporteur.

En aérothermie, la source externe est l'air ambiant et l'échange thermique avec cette source est réalisé à travers un échangeur thermique dont le secondaire est en contact direct avec l'air ambiant. La circulation de l'air ambiant au secondaire de l'échangeur est généralement forcée par un ou plusieurs ventilateurs.

En géothermie, la source externe est le sous-sol et l'échange thermique avec cette source est réalisé à travers un ensemble d'échangeurs verticaux, de type sonde géothermique verticale, constitués de canalisations insérées dans le sous-sol. L'échange thermique avec cette source est généralement réalisé à travers un échangeur thermique dont le secondaire est raccordé aux échangeurs verticaux par l'intermédiaire de canalisations, dans lesquelles circule un fluide caloporteur. Les pompes à chaleur dites géothermiques présentent un meilleur niveau de performance énergétique global, c'est-à-dire moyenné sur une année, que les pompes à chaleur dites aérothermiques.

Le coefficient de performance d'une machine thermodynamique peut être défini comme le rapport entre l'énergie calorifique produite par la machine et l'énergie électrique consommée par le compresseur. Ce coefficient dépend de l'écart entre les températures de condensation et d'évaporation du fluide frigorigène qui sont continuellement adaptées aux températures requises au secondaire des échangeurs fonctionnant en condenseur et en évaporateur. Plus l'écart entre ces deux températures est réduit, plus le coefficient de performance est élevé.

La température du sous-sol est beaucoup moins sujette aux variations saisonnières que la température de l'air ambiant. Les besoins calorifiques étant généralement plus importants durant la période hivernale, lorsque la température du sous-sol est plus élevée que la température de l'air, la performance énergétique des machines exploitant l'énergie calorifique du sous-sol fonctionnent, durant cette période, avec un niveau de performance énergétique supérieur aux machines exploitant l'énergie calorifique contenue dans l'air ambiant. De la même façon, les besoins frigorifiques étant généralement plus importants durant la période estivale, lorsque la température du sous-sol est plus basse que la température de l'air, les machines exploitant l'énergie frigorifique du sous-sol fonctionnent durant cette période avec un niveau de performance énergétique supérieur aux machines exploitant l'énergie frigorifique contenue dans l'air ambiant.

Les pompes à chaleur géothermiques présentent plusieurs inconvénients.

Il existe des périodes de l'année pendant lesquelles l'exploitation de la source géothermique est moins favorable pour la performance énergétique de la pompe à chaleur que ne le serait l'exploitation de la source aérothermique. Ces situations dépendent de l'environnement géologique et climatique du lieu où est installée la machine et également de la nature des usages du consommateur d'énergie thermique.

Ces situations se rencontrent notamment durant les intersaisons, lorsque la température de l'air ambiant atteint temporairement des valeurs plus favorables que la température du sous-sol. Durant ces périodes, la température de l'air ambiant peut atteindre des valeurs plus élevées que la température du sous-sol alors que le consommateur d'énergie thermique absorbe de l'énergie calorifique. De la même façon la température de l'air ambiant peut atteindre des valeurs plus basses que la température du sous-sol alors que le consommateur d'énergie thermique absorbe de l'énergie frigorifique.

Ces situations peuvent également se rencontrer lorsque le consommateur d'énergie thermique présente des usages qui ne sont pas en lien avec les saisons. Un exemple caractéristique concerne la consommation d'eau chaude sanitaire, qui est généralement répartie de façon uniforme tout au long de l'année. Ce type d'usage se rencontre couramment dans les bâtiments hospitaliers, dans les bâtiments hôteliers, ou dans le logement. En période hivernale, l'exploitation de l'énergie contenue dans le sous-sol pour la production d'eau chaude est plus favorable que l'exploitation de l'énergie aérothermique. Durant la période estivale, au contraire, l'exploitation de la source géothermique pour cette production calorifique conduit à des niveaux de performance de la pompe à chaleur bien plus faibles en comparaison d'une pompe à chaleur exploitant la source aérothermique.

Un autre exemple concerne le chauffage des bassins des piscines, dont l'eau est renouvelée régulièrement pour des raisons sanitaires. Le besoin de chauffage est effectif toute l'année, y compris en période estivale.

De telles situations se rencontrent également dans le domaine industriel où la demande en énergie frigorifique est effective durant toute l'année, y compris pendant la période hivernale. Pour ces applications, l'exploitation de l'énergie frigorifique de l'air ambiant conduirait pendant la période hivernale à un niveau de performance bien supérieur à l'exploitation de la source géothermique.

Dans une pompe à chaleur géothermique, l'énergie thermique contenue dans le sous-sol est située dans l'emprise des échangeurs verticaux. L'énergie contenue dans cette portion du sous-sol ne se renouvelle naturellement que de façon extrêmement lente et limitée. L'exploitation énergétique du sous-sol génère alors localement une variation, à la hausse ou à la baisse, de sa température, qui peut d'ailleurs conduire sur le long terme à l'épuisement de la ressource si cette exploitation s'avère trop importante. La source géothermique, qui est exploitée de façon locale, n'est donc pas inépuisable, au contraire de l'énergie thermique exploitée par les machines aérothermiques, qui est contenue dans l'air ambiant, et qui se renouvelle sans cesse. La quantité d'énergie calorifique ou frigorifique qu'une source géothermique locale peut fournir annuellement, autrement dit sa capacité énergétique, est donc limitée.

Pour une application donnée et un sous-sol présentant localement des propriétés thermiques et hydrogéologiques données, le dimensionnement d'un champ de sondes géothermiques, c'est-à-dire le nombre et la profondeur des échangeurs verticaux et leur emprise dans le sous-sol, dépendra alors essentiellement du niveau de sollicitation énergétique du sous-sol, c'est à dire de la quantité d'énergie calorifique ou frigorifique qui sera prélevée annuellement au sous-sol. Pour augmenter la quantité d'énergie calorifique ou frigorifique qu'une source géothermique locale pourra fournir annuellement, il est nécessaire d'augmenter le dimensionnement du champ de sondes géothermiques, ce qui est très coûteux compte tenu des coûts élevés associés aux travaux d'installation et de raccordement des échangeurs verticaux dans le sous-sol.

Un autre moyen permettant d'augmenter la capacité de la source géothermique consiste à effectuer une recharge calorifique ou frigorifique du sous-sol à partir d'une autre ressource, lorsque cette autre ressource est disponible et exploitable avec un coût énergétique faible. L'inertie thermique du sous-sol est alors utilisée pour stocker à une certaine période une énergie calorifique ou frigorifique produite à faible coût énergétique à partir d'une autre source, et la rendre disponible à une période ultérieure, correspondant à la période de demande thermique du consommateur d'énergie.

La source aérothermique peut constituer une source d'énergie exploitable à faible coût énergétique à certaines périodes de l'année. En effet, en période estivale, l'exploitation de l'énergie calorifique contenue dans l'air ambiant pour recharger le sous-sol en énergie calorifique peut être réalisée avec un très haut rendement énergétique. De la même façon, en période hivernale, l'exploitation de l'énergie frigorifique contenue dans l'air ambiant pour recharger le sous-sol en énergie frigorifique, ou autrement dit pour décharger le sous-sol en énergie calorifique, peut être également réalisée avec un très haut rendement énergétique.

Le document EP2863154 décrit une pompe à chaleur réversible exploitant à la fois la source géothermique et la source aérothermique. Cette machine permet d'exploiter à chaque instant la ressource qui est la plus favorable pour la performance énergétique. Une telle pompe à chaleur n'est pas complètement satisfaisante. Ce document divulgue une machine thermodynamique ayant les caractéristiques du préambule de la revendication 1.

### Objet de l'invention

La présente invention a pour but de résoudre les problèmes mentionnés ci- dessus et notamment de proposer une machine thermodynamique, qui est capable d'exploiter alternativement ou simultanément une ressource de type géothermique et une ressource de type aérothermique et qui est également capable de gérer de façon active la source géothermique en réalisant une recharge calorifique ou frigorifique de la source géothermique à partir de la source aérothermique.

On tend à résoudre ces besoins au moyen d'une machine thermodynamique selon la revendication 1.

Dans un développement, la machine comporte un circuit de commande configuré pour définir sélectivement:
- un premier mode de fonctionnement dans lequel le premier dispositif de commutation est dans la deuxième configuration, le deuxième dispositif de commutation et le dispositif de gestion du fluide frigorigène étant dans la première configuration pour transférer des calories de la source géothermique et/ou de la source aérothermique vers la charge thermique ;
- un deuxième mode de fonctionnement dans lequel le deuxième dispositif de commutation est dans la deuxième configuration, le premier dispositif de commutation et le dispositif de gestion du fluide frigorigène étant dans la première configuration pour transférer des calories de la source géothermique vers la source aérothermique ;
- un troisième mode de fonctionnement dans lequel le dispositif de gestion du fluide frigorigène est dans la deuxième configuration, le premier dispositif de commutation et le deuxième dispositif de commutation étant dans la première configuration pour transférer des calories de la charge thermique vers la source géothermique et/ou la source aérothermique ;
- un quatrième mode de fonctionnement dans lequel le dispositif de gestion du fluide frigorigène, le premier dispositif de commutation et le deuxième dispositif de commutation sont dans la deuxième configuration pour transférer des calories de la source aérothermique vers la source géothermique.

Selon un autre développement, la machine comporte :
- un premier capteur de température configuré pour mesurer la température à l'entrée du au moins un circuit secondaire du deuxième échangeur de chaleur ;
- un deuxième capteur de température configuré pour mesurer la température à l'entrée du au moins un circuit secondaire du troisième échangeur de chaleur ; dans laquelle le premier détendeur et le second détendeur sont à taux d'ouverture variable et dans laquelle le circuit de commande est configuré pour contrôler le taux d'ouverture du premier détendeur et le taux d'ouverture du second détendeur et ajuster la puissance calorifique ou frigorifique transmise respectivement à travers le deuxième échangeur de chaleur et le troisième échangeur de chaleur en fonction des valeurs de températures mesurées à l'entrée du au moins un circuit secondaire du deuxième échangeur de chaleur et à l'entrée du au moins un circuit secondaire du troisième échangeur de chaleur.

Avantageusement le circuit de commande est configuré pour fermer le premier détendeur dans le premier mode de fonctionnement quand le circuit de commande constate que la valeur de température à l'entrée du au moins un circuit secondaire du deuxième échangeur de chaleur est inférieure à la valeur de température à l'entrée du au moins un circuit secondaire du troisième échangeur de chaleur. Dans un mode de réalisation particulier, le circuit de commande est configuré pour fermer le deuxième détendeur dans le premier mode de fonctionnement quand le circuit de commande constate que la valeur de température à l'entrée du au moins un circuit secondaire du deuxième échangeur de chaleur est supérieure à la valeur de température à l'entrée du au moins un circuit secondaire du troisième échangeur de chaleur.

Préférentiellement, le circuit de commande est configuré pour fermer le premier détendeur dans le troisième mode de fonctionnement quand le circuit de commande constate que la valeur de température à l'entrée du au moins un circuit secondaire du deuxième échangeur de chaleur est supérieure à la valeur de température à l'entrée du au moins un circuit secondaire du troisième échangeur de chaleur.

Dans un mode de réalisation particulier, le circuit de commande est configuré pour fermer le deuxième détendeur dans le troisième mode de fonctionnement quand le circuit de commande constate que la valeur de température à l'entrée du au moins un circuit secondaire du deuxième échangeur de chaleur est inférieure à la valeur de température à l'entrée du au moins un circuit secondaire du troisième échangeur de chaleur.

Avantageusement, la machine comporte des moyens de mesure de la température de la source géothermique et le circuit de commande comporte un modèle prévisionnel de la température de la source géothermique dans le temps, le circuit de commande étant configuré pour activer le second mode de fonctionnement ou le quatrième mode de fonctionnement lorsque le circuit de commande constate que la température de la source géothermique s'écarte de la température du modèle prévisionnel au-delà d'une valeur seuil.

Dans un mode de réalisation particulier, les moyens de mesure de la température de la source géothermique sont formés par le premier capteur de température et un dispositif d'estimation configuré pour estimer la température de la source géothermique à partir de la température à l'entrée du au moins un circuit secondaire du deuxième échangeur de chaleur.

Dans un développement, les moyens de mesure de la température de la source géothermique sont formés par un troisième capteur de température destiné à être installé dans le sous-sol à proximité de la source géothermique. Avantageusement, le circuit de commande est configuré pour activer le second mode de fonctionnement seulement lorsque le circuit de commande constate que la température à l'entrée du au moins un circuit secondaire du troisième échangeur de chaleur est inférieure à la température à l'entrée du au moins un circuit secondaire du deuxième échangeur de chaleur et/ou pour activer le quatrième mode de fonctionnement seulement lorsque le circuit de commande constate que la température à l'entrée du au moins un circuit secondaire du troisième échangeur de chaleur est supérieure à la température à l'entrée du au moins un circuit secondaire du deuxième échangeur de chaleur.

De manière avantageuse, la machine comporte un second circuit frigorigène distinct du premier circuit frigorigène à l'intérieur duquel circule un second fluide frigorigène, le second circuit frigorigène connectant le premier échangeur de chaleur, le deuxième échangeur de chaleur et le troisième échangeur de chaleur, le second circuit frigorigène possédant un deuxième dispositif de gestion du fluide frigorigène, un compresseur, un premier détendeur et un deuxième détendeur, un premier nœud de liaison, un deuxième nœud de liaison, un troisième nœud de liaison, un quatrième nœud de liaison, un premier dispositif de commutation, un deuxième dispositif de commutation agencés de manière semblable au premier circuit frigorigène.

Préférentiellement, le circuit de commande est configuré pour définir sélectivement pour le second circuit frigorigène des premier, deuxième, troisième et quatrièmes modes de fonctionnement semblables aux premier, deuxième, troisième et quatrième modes de fonctionnement du premier circuit frigorigène. Dans un autre développement, le circuit de commande est configuré pour définir une configuration dans laquelle le premier circuit frigorigène est dans le premier mode de fonctionnement, le second détendeur du premier circuit frigorigène étant maintenu fermé, et le second circuit frigorigène est dans le deuxième mode de fonctionnement.

Préférentiellement, le circuit de commande est configuré pour définir une configuration dans laquelle le premier circuit frigorigène est dans le premier mode de fonctionnement, le premier détendeur du premier circuit frigorigène étant maintenu fermé, et le second circuit frigorigène est dans le quatrième mode de fonctionnement.

Il est également avantageux de prévoir que le circuit de commande soit configuré pour définir une configuration dans laquelle le premier circuit frigorigène est dans le troisième mode de fonctionnement, le premier détendeur du premier circuit frigorigène étant maintenu fermé, et le second circuit frigorigène est dans le deuxième mode de fonctionnement.

Dans une configuration particulière, le circuit de commande est configuré pour définir une configuration dans laquelle le premier circuit frigorigène est dans le troisième mode de fonctionnement, le second détendeur du premier circuit frigorigène étant maintenu fermé, et le second circuit frigorigène est dans le quatrième mode de fonctionnement.

L'invention a également pour objet un procédé de fonctionnement d'une machine qui permet d'exploiter une ressource de type géothermique et une ressource de type aérothermique et qui permet de gérer de façon active la source géothermique en effectuant une recharge calorifique ou frigorifique de la source géothermique à partir de la source aérothermique.

On tend à résoudre ces besoins au moyen d'un procédé de fonctionnement d'une machine thermodynamique comportant les étapes :
- Fournir une machine thermodynamique selon l'une des configurations précédentes ;
- Faire fonctionner la machine thermodynamique dans un mode de fonctionnement choisi parmi :
   i) un montage parallèle du troisième échangeur de chaleur et du deuxième échangeur de chaleur, le troisième échangeur de chaleur et le deuxième échangeur de chaleur fonctionnant en évaporateurs, entre la sortie du premier échangeur de chaleur qui fonctionne en condenseur de fluide frigorigène, et l'entrée du compresseur,
   ii) un montage série du troisième échangeur de chaleur qui fonctionne en condenseur de fluide frigorigène, et du deuxième échangeur de chaleur qui fonctionne en évaporateur de fluide frigorigène, entre la sortie du compresseur et l'entrée du compresseur,
   iii) un montage parallèle du troisième échangeur de chaleur et du deuxième échangeur de chaleur, le troisième échangeur de chaleur et le deuxième échangeur de chaleur fonctionnant en condenseurs de fluide frigorigène, entre la sortie du compresseur et l'entrée du premier échangeur de chaleur qui fonctionne en évaporateur de fluide frigorigène,
   iv) un montage série du deuxième échangeur de chaleur qui fonctionne en condenseur de fluide frigorigène, et du troisième échangeur de chaleur qui fonctionne en évaporateur de fluide frigorigène, entre la sortie du compresseur et l'entrée du compresseur.

On tend à résoudre ces besoins au moyen d'un procédé de fonctionnement d'une machine thermodynamique comportant les étapes :
- Fournir une machine thermodynamique selon l'une des configurations précédentes ;
- Faire fonctionner la machine thermodynamique dans au moins un des modes de réalisation choisi parmi
   i) le premier échangeur de chaleur condense le premier fluide frigorigène, le deuxième échangeur de chaleur vaporise le premier fluide frigorigène et le second fluide frigorigène, le troisième échangeur de chaleur condense le second fluide frigorigène, le premier fluide frigorigène ne passe pas au travers du troisième échangeur de chaleur, et le second fluide frigorigène ne passe pas au travers du premier échangeur de chaleur ;
   ii) le premier échangeur de chaleur condense le premier fluide frigorigène, le troisième échangeur de chaleur vaporise le premier fluide frigorigène et le second fluide frigorigène, le deuxième échangeur de chaleur condense le second fluide frigorigène, le premier fluide frigorigène ne passe pas au travers du deuxième échangeur de chaleur et le second fluide frigorigène ne passe pas au travers du premier échangeur de chaleur ;
   iii) le premier échangeur de chaleur vaporise le premier fluide frigorigène, le troisième échangeur de chaleur condense le premier fluide frigorigène et le second fluide frigorigène, le deuxième échangeur de chaleur vaporise le second fluide frigorigène, le premier fluide frigorigène ne passe pas au travers du deuxième échangeur de chaleur et le second fluide frigorigène ne passe pas au travers du premier échangeur de chaleur ;
   iv)le premier échangeur de chaleur vaporise le premier fluide frigorigène, le deuxième échangeur de chaleur condense le premier fluide frigorigène et le second fluide frigorigène, le troisième échangeur de chaleur vaporise le second fluide frigorigène, le premier fluide frigorigène ne passe pas au travers du troisième échangeur de chaleur et le second fluide frigorigène ne passe pas au travers du premier échangeur de chaleur.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
la figure 1 représente, de manière schématique, une machine thermodynamique selon l'invention à l'interface entre une charge thermique, une première source externe géothermique, et une deuxième source externe aérothermique, selon un premier mode de réalisation ;
la figure 2A représente, de manière schématique, une machine thermodynamique selon le premier mode de réalisation, dans un mode de fonctionnement de type production calorifique ;
la figure 2B représente, de manière schématique, une machine thermodynamique selon le premier mode de réalisation, dans un mode de fonctionnement de type production calorifique où seule la source géothermique est exploitée ;
la figure 2C représente, de manière schématique, une machine thermodynamique selon le premier mode de réalisation, dans un mode de fonctionnement de type production calorifique où seule la source aérothermique est exploitée ;
la figure 3 représente, de manière schématique, une machine thermodynamique selon le premier mode de réalisation, dans un mode de fonctionnement de type décharge de la source géothermique ;
la figure 4A représente, de manière schématique, une machine thermodynamique selon le premier mode de réalisation, dans un mode de fonctionnement de type production frigorifique ;
la figure 4B représente, de manière schématique, une machine thermodynamique selon le premier mode de réalisation, dans un mode de fonctionnement de type production frigorifique où seule la source géothermique est exploitée ;
la figure 4C représente, de manière schématique, une machine thermodynamique selon le premier mode de réalisation, dans un mode de fonctionnement de type production frigorifique où seule la source aérothermique est exploitée ;
la figure 5 représente, de manière schématique, une machine thermodynamique selon le premier mode de réalisation, dans un mode de fonctionnement de type recharge de la source géothermique ;
la figure 6 représente, de manière schématique, un deuxième mode de réalisation d'une machine thermodynamique selon l'invention à l'interface entre une charge thermique, une première source externe géothermique, et une deuxième source externe aérothermique, avec deux circuits frigorigènes ;
la figure 7 représente, de manière schématique, une machine thermodynamique selon le deuxième mode de réalisation, dont le premier circuit frigorigène réalise une production calorifique où seule la source géothermique est exploitée et dont le deuxième circuit frigorigène réalise la décharge de la source géothermique ;
la figure 8 représente, de manière schématique, une machine thermodynamique selon le deuxième mode de réalisation, dont le premier circuit frigorigène réalise une production calorifique où seule la source aérothermique est exploitée, et dont le deuxième circuit frigorigène réalise la recharge de la source géothermique ;
la figure 9 représente, de manière schématique, une machine thermodynamique selon le deuxième mode de réalisation, dont le premier circuit frigorigène réalise une production frigorifique où seule la source aérothermique est exploitée, et dont le deuxième circuit frigorigène réalise la décharge de la source géothermique ;
la figure 10 représente, de manière schématique, une machine thermodynamique selon le deuxième mode de réalisation, dont le premier circuit frigorigène fonctionne réalise production frigorifique où seule la source géothermique est exploitée, et dont le deuxième circuit frigorigène réalise la recharge de la source géothermique.

### Description des modes de réalisation

La machine thermodynamique 100 est de type pompe à chaleur à cycle réversible et possède au moins une pompe à chaleur dont l'énergie utile est rejetée sur une charge thermique 200. L'énergie utile est prélevée d'une ou plusieurs sources thermiques externes. Une source externe est définie comme un ou plusieurs éléments capables de fournir indifféremment de l'énergie calorifique ou de l'énergie frigorifique à la machine thermodynamique.

De préférence, les sources externes sont des éléments naturels, tel que l'air ambiant, l'eau du milieu naturel, le sol ou tout type d'élément extérieur. La machine thermodynamique peut être munie d'un ou plusieurs systèmes intermédiaires d'échange thermique pour adresser chacun des éléments extérieurs. La machine thermodynamique est destinée à fonctionner avec une première source thermique externe qui est une source géothermique et avec une deuxième source thermique externe qui est une source aérothermique.

La charge thermique 200 également appelée consommateur d'énergie thermique 200 est par exemple un système de chauffage, et/ou un système de refroidissement, et/ou un producteur d'eau chaude de préférence sanitaire.

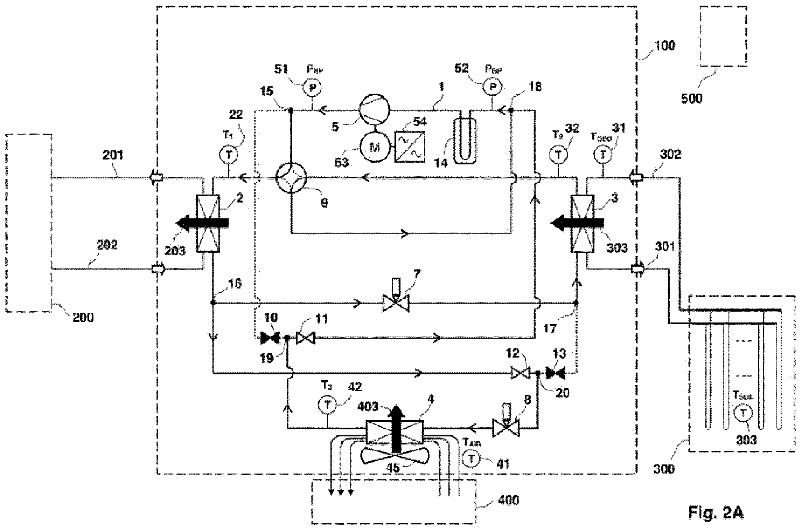

La machine thermodynamique 100 possède une pluralité de canalisations dans lesquelles un ou plusieurs fluides peuvent circuler. Les fluides peuvent être sous la forme liquide ou gazeuse. Le sens de circulation du fluide est matérialisé par des flèches sur les figures 2A, 2B, 2C, 3, 4A, 4B, 4C, 5, 7, 8, 9 et 10. Les canalisations autorisant une circulation de fluide sont représentées par un trait plein alors que les canalisations n'autorisant pas une circulation de fluide sont matérialisées par des pointillés.

La machine thermodynamique possède des vannes et des détendeurs. Les vannes et détendeurs sont indiqués en blanc lorsqu'ils sont en position ouverte autorisant la circulation d'un fluide. Les vannes et détendeurs en position fermée sont indiqués en noir empêchant la circulation du fluide.

Les flèches disposées sur les échangeurs de chaleur indiquent un transfert de chaleur au travers des échangeurs thermiques. Le sens des flèches indique le sens d'écoulement de la chaleur. Une flèche sortant de la machine thermodynamique 100 indique un transfert de puissance calorifique de la machine 100 vers l'extérieur, alors qu'une flèche entrant dans la machine thermodynamique 100 indique un transfert de puissance frigorifique de la machine 100 vers l'extérieur.

La machine thermodynamique 100 comprend un circuit frigorigène 1 dans lequel circule un fluide frigorigène ou au moins un fluide frigorigène. Le fluide frigorigène peut être pur ou être un mélange de fluides. Le fluide frigorigène peut se présenter sous forme gazeuse ou liquide en fonction de la pression et de la température dans le circuit frigorigène et notamment dans les échangeurs de chaleur. De manière avantageuse, les températures de changement d'état liquide-gaz du fluide frigorigène sont situées à l'intérieur de la gamme de températures de fonctionnement de la machine thermodynamique. Le fluide frigorigène est préférentiellement choisi parmi des Hydro Fluoro Carbones, par exemple le R134a (1,1,1,2-tétrafluoroéthane), le R410A (mélange de difuorométhane et 1,1,1,2,2-pentafluoroéthane), le R407C (mélange de 1,1,1,2-tétrafluoroéthane, 1,1,1,2,2-pentafluoroéthane et de difuorométhane), ou parmi les Hydro Fluoro Oléfines, par exemple le R1234ze (trans-1,3,3,3-Tétrafluoroprop-1-ène), le R-1233zd (trans-1-chloro-3,3,3-trifluoro-1-propene), ou des mélanges tels que le R452B, ou le R545B. Préférentiellement, la température de changement d'état liquide-gaz du fluide frigorigène est comprise entre -50°C et 100°C.

La machine thermodynamique 100 possède un premier échangeur thermique 2 qui produit de l'énergie calorifique ou frigorifique. Le premier échangeur thermique 2 alimente la charge thermique 200, au moyen d'un premier fluide caloporteur circulant dans des canalisations 201 et 202 qui relient le secondaire du premier échangeur thermique 2 avec la charge thermique 200. Le premier échangeur thermique 2 permet de transférer de l'énergie calorifique ou frigorifique depuis le fluide frigorigène circulant au primaire de l'échangeur thermique 2 vers la charge thermique 200 tout en assurant la condensation ou l'évaporation du fluide frigorigène.

La machine thermodynamique 100 possède un deuxième échangeur thermique 3 à travers lequel la machine thermodynamique 100 échange de l'énergie calorifique ou frigorifique avec la source géothermique 300. Le secondaire du deuxième échangeur thermique 3 peut être en contact direct avec la source géothermique 300, ou reliée thermiquement à la source géothermique 300 par l'intermédiaire d'un deuxième fluide caloporteur. Le deuxième échangeur thermique 3 permet de transférer de l'énergie calorifique ou frigorifique depuis le fluide frigorigène circulant au primaire de l'échangeur thermique 3 vers la source géothermique 300 tout en assurant la condensation ou l'évaporation du fluide frigorigène.

Dans un mode de réalisation préférentiel, la source géothermique 300 est le sous-sol, muni d'un ensemble d'échangeurs verticaux de type sonde géothermique verticale. La température de la source géothermique 300 est avantageusement comprise entre -10°C et +30°C. Le second fluide caloporteur circule dans des canalisations 301 et 302 qui relient le secondaire du deuxième échangeur thermique 3 avec l'ensemble d'échangeurs verticaux en contact avec la source géothermique 300.

La machine thermodynamique 100 possède un troisième échangeur thermique 4 à travers lequel la machine thermodynamique 100 échange de l'énergie calorifique ou frigorifique avec la source aérothermique. Le secondaire du troisième échangeur de chaleur 4 peut être en contact direct avec la source aérothermique 400, ou reliée thermiquement à la source aérothermique 400 par l'intermédiaire d'un troisième fluide caloporteur. Le troisième échangeur thermique 4 permet de transférer de l'énergie calorifique ou frigorifique depuis le fluide frigorigène circulant au primaire de l'échangeur thermique 4 vers la source aérothermique 400 tout en assurant la condensation ou l'évaporation du fluide frigorigène.

Dans un mode de réalisation préférentiel, la source aérothermique 400 est l'air ambiant, en contact direct avec le secondaire du troisième échangeur de chaleur 4, la circulation de l'air ambiant au secondaire du troisième échangeur thermique 4 peut être assurée par un ventilateur 45. La température de la source aérothermique 400 est avantageusement comprise entre -40°C et +50°C.

Les premier, deuxième, et troisième fluides caloporteurs peuvent être identiques ou différents et être présents indépendamment purs ou sous la forme d'un mélange. Chaque fluide caloporteur peut également comporter des substances minérales. De préférence, le fluide caloporteur ne change pas d'état lors du transfert de chaleur entre un échangeur de chaleur et un consommateur de chaud/froid ou une source externe. Le fluide caloporteur peut être choisi parmi l'eau, l'air, une solution aqueuse, du monopropylène glycol, du monoéthylène glycol, des solutions alcooliques ou des sels.

Le circuit frigorigène 1 est connecté au primaire du premier échangeur de chaleur 2, au primaire du deuxième échangeur de chaleur 3 et au primaire du troisième échangeur de chaleur 4. Le fluide frigorigène circule de manière à déplacer des calories entre les échangeurs de chaleur et la charge thermique 200. Le circuit frigorigène 1 alimente chaque échangeur de chaleur en fluide frigorigène. Le circuit frigorigène 1 possède de multiples canalisations reliant les entrées et les sorties des échangeurs de chaleur entre eux afin de pouvoir définir différents sens de circulation du fluide frigorigène et ainsi différents modes de fonctionnement. La machine thermodynamique 100 comprend avantageusement un premier capteur de température 31 configuré pour mesurer la température TGEO du fluide caloporteur en entrée du secondaire de l'échangeur de chaleur 3 et en provenance de la source géothermique 300, et avantageusement un deuxième capteur de température 41 configuré pour mesurer la température TAIR du gaz formant la source aérothermique 400. La mesure des deux températures peut être envoyée à un circuit de commande 500 qui est configuré pour sélectionner à chaque instant la ressource la plus avantageuse, entre les ressources 300 et 400, quant au niveau de performance de la machine. Le circuit de commande 500 est configuré pour sélectionner la source de chaleur ou de froid qui est la plus proche de la température de production requise pour alimenter la charge thermique 200. Ainsi, lorsque la machine doit produire de l'énergie calorifique pour alimenter la charge thermique 200 au moyen de l'échangeur de chaleur 2 qui fonctionne alors en condensateur, le circuit de commande 500 sélectionnera la source qui présente la température qui est plus élevée. Le circuit commande choisira la source aérodynamique si la température TAIR est supérieure à TGEO ou il choisira la source géothermique si la température TGEO est supérieure à TAIR. Au contraire, lorsque la machine produit de l'énergie frigorifique pour alimenter la charge thermique 200 au moyen de l'échangeur de chaleur 2 qui fonctionne alors en évaporateur, le circuit de commande sélectionnera la source qui présente la température la plus basse. Le circuit de commande sélectionnera la source aérothermique si la température TAIR est inférieure à la température TGEO ou la source géothermique si la température TGEO est inférieure à TAIR. Avantageusement, la machine thermodynamique 100 comprend un troisième capteur de température 303 configuré pour mesurer la température TSOL du sous-sol à l'intérieur de la source géothermique 300, dans l'emprise des échangeurs verticaux. Le troisième capteur de température 303 est relié au circuit de commande 500. La mesure de la température du sous-sol est avantageusement utilisée pour suivre à chaque instant l'état de la source géothermique 300, c'est-à-dire la température du sous-sol au niveau de la source géothermique. En alternative, la température du sous-sol est estimée au moyen de la température au secondaire du deuxième échangeur de chaleur 3.

La température de la source géothermique peut être comparée à une température prévisionnelle qui évolue dans le temps et qui représente l'évolution recherchée de la source géothermique par exemple au cours d'une année. Le circuit de commande 500 peut être configuré pour comparer la température de la source géothermique avec la température prévisionnelle. Lorsque le circuit de commande 500 constate que la température de la source géothermique s'écarte de la température prévisionnelle d'une valeur supérieure à une valeur seuil, le circuit de commande 500 peut activer des phases de décharge ou de recharge de la source géothermique 300.

Dans un mode de réalisation particulier, le circuit de commande 500 utilise la température TGEO mesurée par le premier capteur de température 31 en association avec un circuit d'estimation afin de pouvoir estimer la température du sous-sol au niveau de la source géothermique au moyen de la température présente au circuit secondaire du deuxième échangeur de chaleur 3. Le circuit d'estimation est configuré pour estimer la température de la source géothermique à partir de la température TGEO.

La mesure de la température de l'air ambiant au moyen du deuxième capteur de température 41 est comparée à la température de la source géothermique par le circuit de commande 500. Cette comparaison permet au circuit de commande 500 d'activer les opérations de recharge et de décharge calorifique de la source géothermique 300 préférentiellement durant les périodes favorables sur le plan énergétique. Par exemple, la décharge calorifique depuis la source géothermique 300 vers la source aérothermique 400 peut être activée lorsque la température de l'air TAIR est inférieure à la température du sous-sol au niveau de la source géothermique 300 et préférentiellement seulement dans ce cas de figure. De la même façon, la recharge calorifique de la source géothermie 300 depuis la source aérothermique 400 peut être activée lorsque la température de l'air TAIR est supérieure à la température du sous-sol au niveau de la source géothermique 300 et préférentiellement seulement dans ce cas de figure.

La machine thermodynamique 100 comprend un compresseur 5 comprimant le fluide frigorigène dans le circuit frigorigène 1 lorsque celui-ci se trouve à l'état gazeux. Dans le mode de réalisation avantageux illustré, le compresseur 5 peut être entraîné par un premier moteur électrique 53 muni d'un variateur électronique de vitesse 54 pour adapter sa vitesse à la puissance calorifique ou frigorifique demandée. Le compresseur 5 peut également être formé par deux compresseurs montés en parallèle. Avantageusement, le compresseur 5 est un compresseur 5 à vitesse de rotation ajustable de façon continue. Il est alors possible de réaliser un ajustement continu de la puissance frigorifique ou calorifique transférée à travers le premier échangeur thermique 2.

Le circuit frigorigène 1 comprend également un premier capteur de pression 51 configuré pour mesurer la pression PHP en sortie du compresseur 5 et un deuxième capteur de pression 52 configuré pour mesurer la pression PBP en entrée du compresseur 5.

Dans un mode de réalisation préférentiel, un réservoir 14 est monté dans le circuit frigorigène 1 à l'entrée du compresseur 5. Le réservoir 14 est configuré pour piéger le fluide frigorigène se trouvant à l'état liquide. Ainsi, le compresseur 5 est alimenté avec uniquement un fluide frigorigène à l'état gazeux.

Le circuit frigorigène 1 comprend un dispositif de gestion 9 du fluide frigorigène, avantageusement sous la forme d'une vanne quatre-voies, comportant une première voie d'entrée, une deuxième voie de sortie, une troisième voie d'entrée/sortie et une quatrième voie d'entrée/sortie du fluide frigorigène.

La première voie d'entrée est connectée à la sortie du compresseur 5. La deuxième voie de sortie est connectée à l'entrée du compresseur 5 ou au réservoir 14. La troisième voie est reliée à une première entrée/sortie du premier échangeur de chaleur 2, et la quatrième voie est reliée à une première entrée/sortie du deuxième échangeur de chaleur 3. Le compresseur 5 est disposé dans une canalisation qui relie la première voie d'entrée et la deuxième voie de sortie de la vanne quatre-voies 9.

Le dispositif de gestion 9 est configuré pour définir sélectivement une première configuration ou une seconde configuration. La première configuration relie la première voie avec la troisième voie alors que la quatrième voie est connectée à la deuxième voie. La seconde configuration relie la première voie à la quatrième voie alors que la troisième voie est connectée à la deuxième voie. En d'autres termes, la première configuration relie la sortie du compresseur 5 avec la première entrée/sortie du premier échangeur de chaleur 2 et relie la première entrée/sortie du deuxième échangeur de chaleur 3 avec l'entrée du compresseur 5. La deuxième configuration relie la sortie du compresseur 5 avec la première entrée/sortie du deuxième échangeur de chaleur 3 et relie la première entrée/sortie du premier échangeur de chaleur 2 avec l'entrée du compresseur 5. Un premier détendeur 7, bidirectionnel, est monté dans le circuit frigorigène 1 entre une deuxième entrée/sortie du premier échangeur de chaleur 2 et une deuxième entrée/sortie du deuxième échangeur de chaleur 3. Le premier détendeur 7 est configuré pour abaisser la pression du fluide frigorigène lorsque celui-ci circule dans le premier détendeur 7 à l'état liquide. Le premier détendeur 7 est préférentiellement contrôlé électroniquement. Un deuxième détendeur 8, bidirectionnel, est monté dans le circuit frigorigène 1. Une première borne du détendeur 8 est reliée à une deuxième entrée/sortie du troisième échangeur de chaleur 4 et la deuxième borne du deuxième détendeur 8 est reliée à un deuxième dispositif de commutation. Le détendeur 8 est configuré pour abaisser la pression du fluide frigorigène lorsque celui-ci circule dans le deuxième détendeur 8 à l'état liquide. Le deuxième détendeur 8 est préférentiellement contrôlé électroniquement.

Le circuit frigorigène possède différents nœuds de liaison qui connectent les différents éléments de la machine thermodynamique ensemble. Le circuit frigorigène 1 possède un premier nœud de liaison 15 qui relie la sortie du compresseur 5 avec la première voie d'entrée de la vanne quatre voies 9 et avec un premier dispositif de commutation.

Un deuxième nœud de liaison 16 réalise la connexion entre la seconde entrée/sortie du premier échangeur de chaleur 2, une première borne du premier détendeur 7 et un deuxième dispositif de commutation.

Un troisième nœud de liaison 17 réalise la connexion entre une deuxième borne du premier détendeur 7, la seconde entrée/sortie du deuxième échangeur de chaleur 3 et le deuxième dispositif de commutation.

Un quatrième nœud de liaison 18 réalise la connexion entre l'entrée du compresseur 5, la deuxième voie de la vanne quatre-voies 9 et le premier dispositif de commutation. Le quatrième nœud de liaison 18 peut être disposé entre la deuxième voie de la vanne quatre-voies 9 et le réservoir 14.

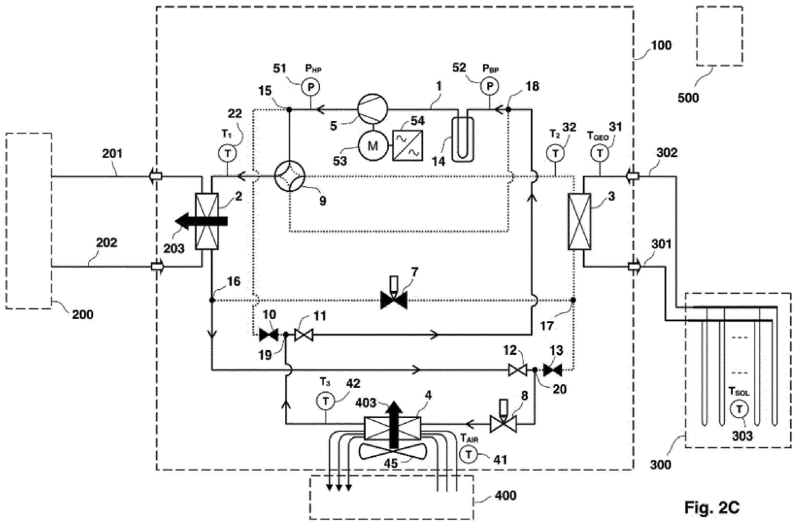

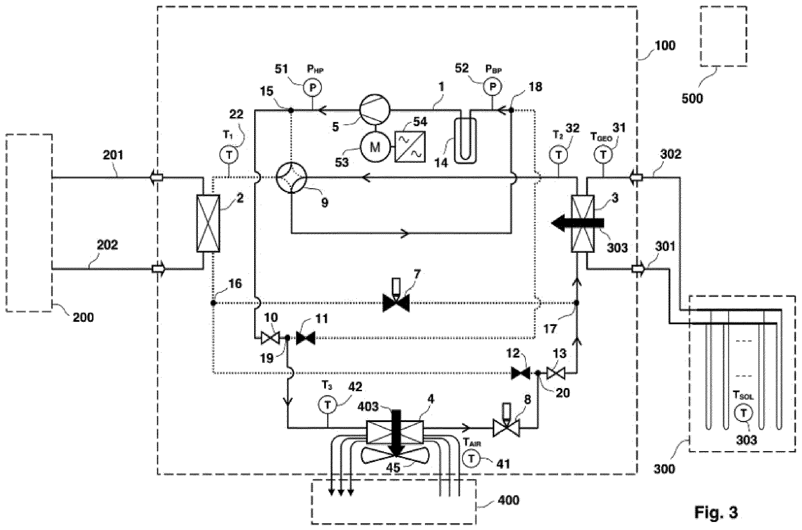

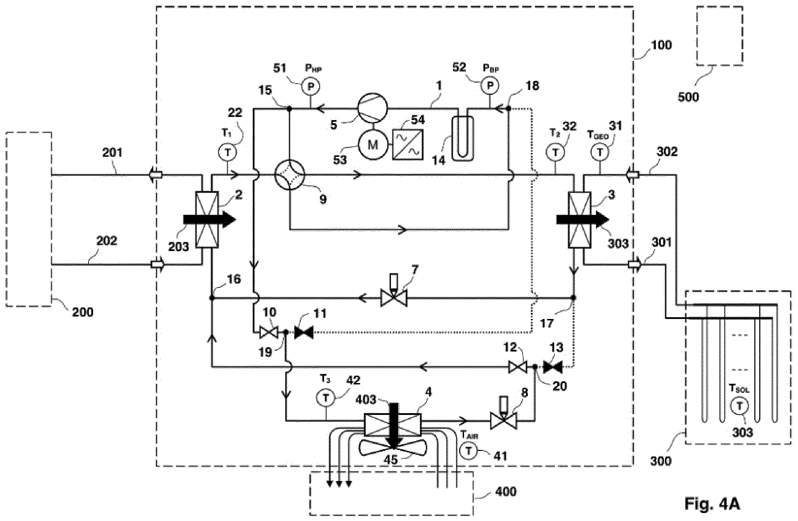

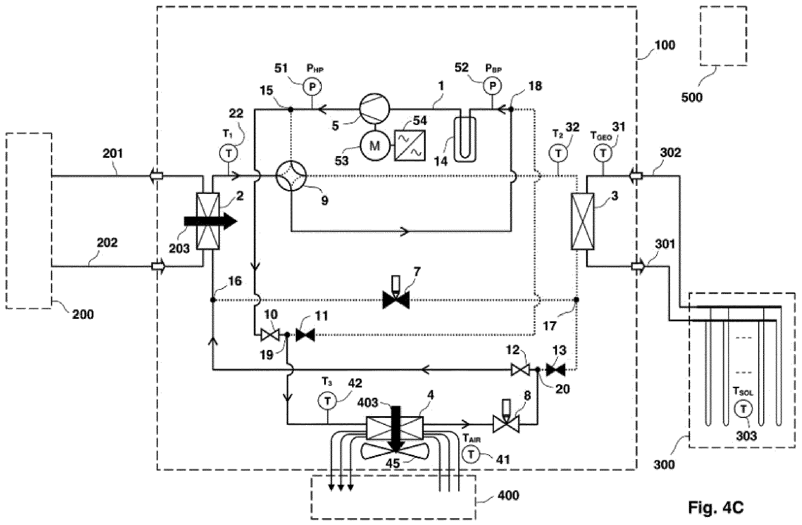

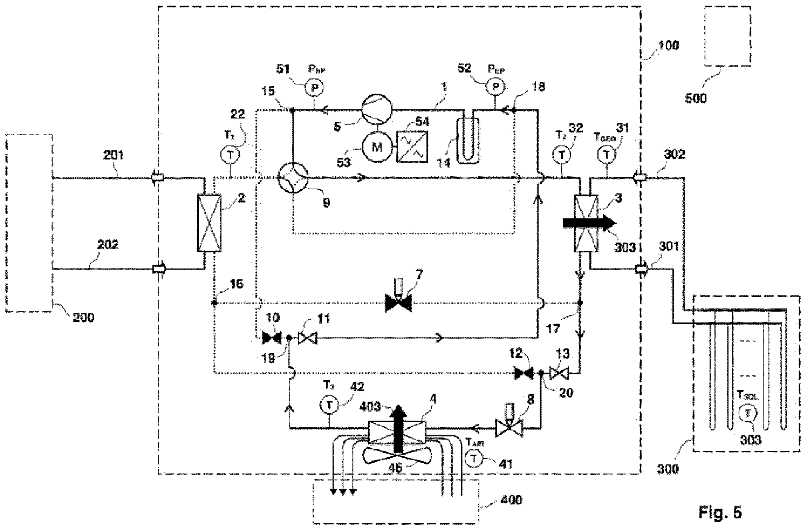

Le premier dispositif de commutation est configuré pour définir sélectivement une première configuration ou une seconde configuration. La première configuration (figures 3, 4A, 4C) relie le premier nœud de liaison 15 à la première entrée/sortie du troisième échangeur de chaleur 4 et empêche la circulation du fluide frigorigène à travers le premier dispositif de commutation avec le quatrième nœud de liaison 18. La deuxième configuration (figures 2A, 2C, 5) relie la première entrée/sortie du troisième échangeur de chaleur 4 au quatrième nœud de liaison 18 et empêche la circulation du fluide frigorigène à travers le premier dispositif de commutation avec le premier nœud de liaison 15.

Le premier dispositif de commutation peut être formé par exemple par deux vannes 10 et 11, de préférence des électrovannes. Dans la première configuration, la vanne 10 est ouverte et la vanne 11 est fermée. Dans la deuxième configuration, la vanne 10 est fermée et la vanne 11 est ouverte.

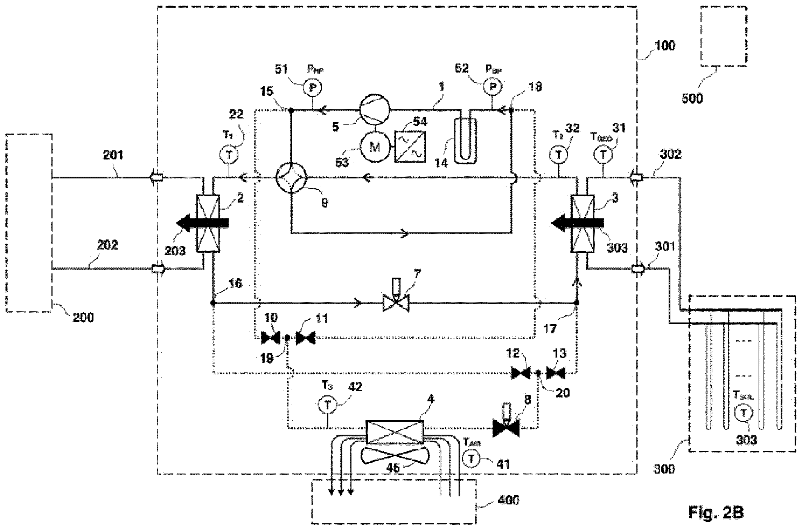

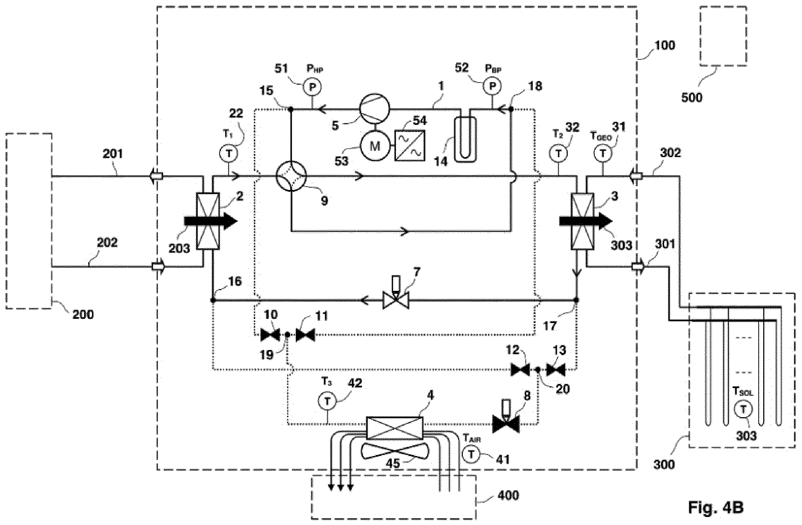

De manière avantageuse, le premier dispositif de commutation est encore configuré pour définir une configuration de blocage dans laquelle aucun fluide ne traverse le premier dispositif de commutation, les vannes 10 et 11 étant fermées (figures 2B et 4B).

Le premier dispositif de commutation définit ou comporte un cinquième nœud de liaison 19 qui relie le premier nœud de liaison 15, le quatrième nœud de liaison 18 et la première entrée/sortie du troisième échangeur de chaleur 4.

Le deuxième dispositif de commutation est configuré pour définir sélectivement une première configuration ou une seconde configuration. La première configuration (figures 2A, 2C, 4A, 4C) relie le deuxième nœud de liaison 16 à la deuxième borne du deuxième détendeur 8 et empêche la circulation du fluide frigorigène avec le troisième nœud de liaison 17 à travers le deuxième dispositif de commutation. La deuxième configuration (figures 3 et 5) relie le deuxième détendeur 8 au troisième nœud de liaison 17 et empêche la circulation du fluide frigorigène à travers le deuxième dispositif de commutation avec le deuxième nœud de liaison 16.

Le deuxième dispositif de commutation peut être formé par deux vannes 12 et 13 montées en série entre le deuxième nœud de liaison 16 et le troisième nœud de liaison 17, de préférence des électrovannes. Dans la première configuration, la vanne 12 est ouverte et la vanne 13 fermée. Dans la deuxième configuration, la vanne 12 est fermée et la vanne 13 est ouverte.

Le deuxième dispositif de commutation définit ou comporte un sixième nœud de liaison 20 qui relie le deuxième nœud de liaison 16, le troisième nœud de liaison 17 et la deuxième borne du deuxième détendeur 8.

De manière avantageuse, le deuxième dispositif de commutation est encore configuré pour définir une configuration de blocage dans laquelle aucun fluide ne traverse le deuxième dispositif de commutation (figures 2B et 4B).

Selon les modes de fonctionnement, les premier et deuxième dispositifs de commutation définissent deux branches disposant le troisième échangeur de chaleur 4 en parallèle du deuxième échangeur de chaleur 3 afin de puiser une énergie calorifique ou frigorifique à la fois à la source aérothermique 400 et à la source géothermique 300, pour la délivrer à la charge thermique 200. Les deux dispositifs de commutation permettent également de disposer le troisième échangeur de chaleur 4 en série avec le deuxième échangeur de chaleur 3 afin de puiser une énergie calorifique ou frigorifique à la source aérothermique 400 pour la délivrer à la source géothermique 300.

Un quatrième capteur de température 22 peut être utilisé pour mesurer la température T1 du fluide frigorigène entre la troisième voie de la vanne quatre-voies 9 et la première entrée/sortie du premier échangeur thermique 2.

Un cinquième capteur de température 32 peut être utilisé pour mesurer la température T2 du fluide frigorigène entre la quatrième voie de la vanne quatre-voies 9 et la première entrée/sortie du deuxième échangeur thermique 3.

Un sixième capteur de température 42 peut être utilisé pour mesurer la température T3 du fluide frigorigène entre le sixième nœud de liaison 19 et la première entrée/sortie du troisième échangeur thermique 4. Les différents capteurs de température sont reliés au circuit de commande.

La machine thermodynamique peut fonctionner dans un mode de production calorifique illustré aux figures 2A, 2B et 2C.

Dans le mode illustré à la figure 2A, la vanne quatre-voie 9 est dans sa première configuration. Le premier dispositif de commutation est dans sa deuxième configuration et le deuxième dispositif de commutation est dans sa première configuration. La sortie du compresseur 5 est reliée à la première entrée/sortie du premier échangeur thermique 2 qui fonctionne en condenseur en étant alimenté en fluide frigorigène à l'état gazeux et à haute pression. La deuxième entrée/sortie du premier échangeur de chaleur 2 est reliée avec l'entrée du compresseur 5 en passant à travers deux branches parallèles, une première branche comportant le premier détendeur 7 et le deuxième échangeur thermique 3, et une deuxième branche comportant le deuxième détendeur 8 et le troisième échangeur thermique 4. Les deux branches se séparent à la deuxième entrée/sortie du premier échangeur thermique 2 au niveau du nœud de liaison 16, et se rejoignent par exemple avant l'entrée du compresseur 5 et avantageusement avant l'entrée du réservoir 14, au niveau du nœud de liaison 18.

La puissance calorifique est fournie à la charge thermique 200. La flèche 203 représente une fourniture de chaleur depuis le circuit frigorigène 1 vers la charge thermique 200. Une partie de la puissance calorifique prélevée par la machine est puisée à la source géothermique 300 au travers de l'échangeur thermique 3, qui fonctionne en évaporateur. La flèche 303 représente une extraction de chaleur depuis la source géothermique 300 vers le circuit frigorigène 1. L'autre partie de la puissance calorifique prélevée à l'extérieur par la machine est puisée à la source aérothermique 400 au travers de l'échangeur thermique 4, qui fonctionne en évaporateur de fluide frigorigène. La flèche 403 représente une extraction de chaleur depuis la source aérothermique 400 vers le circuit frigorigène 1.

Le deuxième échangeur thermique 3 et le troisième échangeur thermique 4 fonctionnent en évaporateur de fluide frigorigène, pour récupérer simultanément de la chaleur depuis la source géothermique 300 et depuis la source aérothermique 400. En contrôlant les degrés d'ouverture respectifs du détendeur 7 et du détendeur 8 par le circuit de commande 500, il est possible d'ajuster les proportions relatives d'énergie calorifique prélevées respectivement à la source géothermique 300 et à la source aérothermique 400.

La vanne 10 est fermée, la totalité du fluide frigorigène à l'état gazeux et à haute pression en provenance du compresseur 5 est dirigée vers le primaire du premier échangeur thermique 2, à l'intérieur duquel le fluide frigorigène se condense en cédant de la chaleur au fluide caloporteur circulant au secondaire du premier échangeur thermique 2. Le fluide frigorigène ressort du premier échangeur thermique 2 à une température plus basse et avantageusement à l'état liquide et à haute pression et il traverse le deuxième nœud de liaison 16 où il se scinde en deux parties.

Une première partie du fluide frigorigène sortant du premier échangeur 2 est dirigée à travers le premier détendeur 7 vers le deuxième échangeur de chaleur 3. Dans le détendeur 7, le fluide frigorigène subit un abaissement de sa pression. En sortie du détendeur 7, le fluide est à plus basse pression et avantageusement à l'état liquide. Le fluide frigorigène est dirigé à travers le troisième nœud de liaison 17 vers le deuxième échangeur thermique 3 à l'intérieur duquel le fluide frigorigène s'évapore en captant de la chaleur depuis le fluide circulant au secondaire du deuxième échangeur thermique 3.

A la sortie du deuxième échangeur thermique 3, le fluide frigorigène est majoritairement à l'état gazeux et à basse pression, et il atteint le quatrième nœud de liaison 18.

L'autre partie du fluide frigorigène sortant du premier échangeur 2 est dirigée à travers le deuxième dispositif de commutation, et notamment la vanne 12 ouverte, vers le troisième échangeur de chaleur 4. Le fluide frigorigène à l'état liquide subit un abaissement de sa pression au moyen du détendeur 8. A la sortie du détendeur 8, le fluide à l'état liquide et à plus basse pression traverse le troisième échangeur thermique 4, fonctionnant en évaporateur. Le fluide frigorigène s'évapore dans le troisième échangeur de chaleur 4 en captant de la chaleur depuis l'air ambiant circulant au secondaire de l'échangeur 4. A sa sortie de l'échangeur 4, le fluide frigorigène est majoritairement à l'état gazeux et à basse pression, et rejoint le réservoir 14 à travers la vanne 11 ouverte et le nœud de liaison 18.

De manière avantageuse, la mesure combinée des températures T2 et T3 est utilisée pour déterminer la valeur de surchauffe du fluide frigorigène à la sortie de l'échangeur 3 d'une part, et à la sortie de l'échangeur 4 d'autre part. Dans un mode de réalisation privilégié, la mesure des températures T2 et T3 est utilisée afin d'imposer la valeur de surchauffe du fluide frigorigène en sortie de l'échangeur 3 et en sortie l'échangeur 4.

Avantageusement, la mesure combinée des températures T2 et T3 est utilisée pour commander le taux d'ouverture du détendeur 7 et le taux d'ouverture du détendeur 8. La mesure des températures est utilisée pour assurer l'évaporation complète du fluide frigorigène à la fois dans l'échangeur 3 et dans l'échangeur 4. De manière particulièrement avantageuse, la mesure de température est associée à une mesure de la pression PBP pour mieux contrôler la valeur de la surchauffe. Il est avantageux de contrôler le taux d'ouverture du détendeur 7 par rapport au taux d'ouverture du détendeur 8 afin de réguler la proportion de fluide traversant le détendeur 7 et le deuxième échangeur thermique 3 par rapport à la proportion de fluide traversant le détendeur 8 et le troisième échangeur thermique 4. Le contrôle des proportions relatives de fluide frigorigène traversant les deux échangeurs thermiques 3 et 4 permet d'ajuster d'une part la puissance calorifique prélevée à la source géothermique 300 à travers le deuxième échangeur 3 et d'autre part la puissance calorifique prélevée à la source aérothermique 400 à travers le troisième échangeur 4.

Dans ce premier mode de fonctionnement, la machine thermodynamique 100, peut fournir une énergie calorifique à la charge thermique 200, tout en ajustant les puissances calorifiques prélevées respectivement à la source géothermique 300 et à la source aérothermique 400.

De manière avantageuse, la mesure combinée des températures TGEO et TAIR est utilisée pour déterminer à chaque instant laquelle des deux sources externes 300 et 400 est la plus favorable pour assurer le niveau de performance énergétique maximal. Ainsi, en comparant les deux températures mesurées TGEO et TAIR, le circuit de commande 500 peut moduler le taux d'ouverture des premier et deuxième détendeurs 7 et 8 pour que la machine thermodynamique 100 délivre la puissance calorique demandée par la charge thermique 200.

Le circuit de commande peut être configuré pour sélectionner l'une ou l'autre des deux sources externes 300 et 400 et fermer totalement l'un ou l'autre des deux détendeurs 8 et 7, plaçant ainsi la machine thermodynamique 100 dans un mode de fonctionnement où seule la ressource la plus favorable est exploitée.

La figure 2B représente un mode de fonctionnement particulier dans lequel seule la source géothermique 300 est exploitée. Le détendeur 8 est totalement fermé, bloquant ainsi la circulation du fluide frigorigène dans le troisième échangeur 4, où aucun échange thermique n'a lieu. Le fluide frigorigène sortant du premier échangeur thermique 2 circule dans sa totalité dans le second échangeur thermique 3 à travers le détendeur 7. La machine thermodynamique 100 fournit une énergie calorifique à la charge thermique 200 et puise de l'énergie calorifique uniquement à la source géothermique 300.

Ce mode de fonctionnement est avantageux lorsque l'exploitation de la source géothermique 300 est plus favorable pour atteindre le niveau de performance de la machine en comparaison de l'exploitation de la source aérothermique 400. La totalité de l'énergie calorifique est prélevée à la source géothermique 300.

La figure 2C représente un mode de fonctionnement particulier dans lequel seule la source aérothermique 400 est exploitée. Le détendeur 7 est totalement fermé, bloquant ainsi la circulation du fluide frigorigène dans le deuxième échangeur 3. Le fluide frigorigène sortant du premier échangeur thermique 2 circule dans sa totalité dans le troisième échangeur thermique 4 à travers le détendeur 8. La machine thermodynamique 100 fournit une énergie calorifique à la charge thermique 200 et puise de l'énergie calorifique uniquement à la source aérothermique 400.

La machine thermodynamique 100, peut prélever de la chaleur uniquement à la source aérothermique 400 lorsque l'exploitation de la source aérothermique 400 est plus favorable pour atteindre le niveau de performance de la machine en comparaison de l'exploitation de la source géothermique 300.

La machine thermodynamique 100 peut également réaliser la décharge de la source géothermique comme illustré à la figure 3. Le premier dispositif de commutation est dans sa première configuration, et le deuxième dispositif de commutation est dans sa deuxième configuration. La vanne quatre-voie 9 est positionnée dans sa première configuration pour connecter l'entrée du compresseur 5 avec la première entrée/sortie du deuxième échangeur thermique 3. Le détendeur 7 est fermé. La sortie du compresseur 5 est connectée à l'entrée du compresseur 5 de sorte que le fluide frigorigène passe successivement à travers le troisième échangeur thermique 4, qui fonctionne en condenseur, puis à travers le deuxième échangeur thermique 3 qui fonctionne en évaporateur de fluide frigorigène. Les calories extraites depuis la source géothermique 300 sont évacuées vers la source aérothermique 400. Ainsi, il est possible de décharger en énergie calorifique la source géothermique 300 vers la source aérothermique 400, c'est-à-dire d'évacuer des calories hors de la source géothermique 300. La flèche 403 représente une fourniture de chaleur depuis le circuit frigorigène 1 vers la source aérothermique 400. La flèche 303 représente une extraction de chaleur depuis la source géothermique 300 vers le circuit frigorigène 1.

La totalité du fluide frigorigène à l'état gazeux et à haute pression sortant du compresseur 5 est orientée, à travers la vanne 10 ouverte, vers le troisième échangeur thermique 4, où le fluide frigorigène se condense en cédant de la chaleur à l'air circulant dans le secondaire du troisième échangeur 4. Le fluide frigorigène ressort du primaire du troisième échangeur 4 à une température plus basse et avantageusement à l'état liquide et à haute pression.

A la sortie du troisième échangeur thermique 4, le fluide frigorigène traverse le détendeur 8 et subit un abaissement de sa pression. A la sortie du détendeur 8, le fluide est à basse pression et avantageusement à l'état liquide. Le fluide frigorigène est dirigé, à travers la vanne 13 ouverte, vers le deuxième échangeur thermique 3 où le fluide frigorigène s'évapore en captant de la chaleur depuis le fluide caloporteur circulant au secondaire de l'échangeur 3.

A la sortie du primaire du deuxième échangeur 3, le fluide frigorigène est majoritairement à l'état gazeux et à basse pression, et entre dans la quatrième voie de la vanne quatre-voies 9. La vanne quatre-voies 9 est placée dans sa première configuration et le fluide frigorigène est orienté à travers la deuxième voie de la vanne quatre-voies 9 vers le réservoir 14.

De manière avantageuse, la mesure de la température T2 est utilisée pour déterminer la valeur de surchauffe du fluide frigorigène à la sortie de l'échangeur 3. Préférentiellement, la mesure de la température T2 est utilisée afin d'imposer la valeur de surchauffe du fluide frigorigène en sortie du deuxième échangeur 3. Avantageusement, la mesure de la température T2 est utilisée pour commander le taux d'ouverture du détendeur 8. La mesure de la température T2 est utilisée pour assurer l'évaporation complète du fluide frigorigène dans le primaire de l'échangeur 3. De manière particulièrement avantageuse, la mesure de la température T2 est associée à une mesure de la pression PBP pour mieux contrôler la valeur de la surchauffe.

La machine thermodynamique 100 peut également fonctionner en production frigorifique comme cela est illustré aux figures 4A, 4B et 4C. Cela permet de fournir une énergie frigorifique à la charge thermique 200, tout en ajustant les puissances calorifiques transférées respectivement à la source géothermique 300 et à la source aérothermique 400.

Dans le mode de fonctionnement illustré à la figure 4A, la vanne quatre-voie 9 est dans sa deuxième configuration pour relier la sortie du compresseur 5 avec la première entrée/sortie du deuxième échangeur thermique 3 et pour relier la première entrée/sortie du premier échangeur thermique 2 avec l'entrée du compresseur 5. Le premier dispositif de commutation est placé dans sa première configuration et le deuxième dispositif de commutation est placé dans sa première configuration.

Le fluide frigorigène quitte le compresseur 5 pour passer d'une part à travers le deuxième échangeur thermique 3 et d'autre part à travers le troisième échangeur thermique 4, qui fonctionnent tous les deux en condenseur pour évacuer simultanément de la chaleur vers la source géothermique 300 et vers la source aérothermique 400. Le circuit frigorigène définit deux branches qui se séparent à la sortie du compresseur 5, et se rejoignent à la deuxième entrée/sortie du premier échangeur thermique 2 au niveau du nœud de liaison 16.

Une partie du fluide frigorigène à l'état gazeux et à haute pression est dirigée à travers la vanne 9 vers la première entrée/sortie du deuxième échangeur de chaleur 3 à l'intérieur duquel le fluide frigorigène se condense en cédant de la chaleur au fluide caloporteur circulant au secondaire de l'échangeur 3. Le fluide frigorigène ressort du deuxième échangeur 3 à une température plus basse et avantageusement à l'état liquide et à haute pression. A la sortie du deuxième échangeur thermique 3, le fluide frigorigène traverse le détendeur 7, dans lequel le fluide frigorigène subit un abaissement de sa pression. A la sortie du détendeur 7, le fluide est à basse pression et avantageusement à l'état liquide. Le fluide frigorigène se dirige ensuite vers le premier échangeur thermique 2.

L'autre partie du fluide frigorigène sortant du compresseur 5 est dirigée à travers la vanne 10 vers le troisième échangeur de chaleur 4, à l'intérieur duquel le fluide frigorigène se condense en cédant de la chaleur à l'air ambiant. Le fluide frigorigène ressort du troisième échangeur 4 à une température plus basse et avantageusement à l'état liquide et à haute pression. A la sortie du troisième échangeur thermique 4, le fluide frigorigène traverse le détendeur 8, dans lequel le fluide frigorigène subit un abaissement de sa pression. A la sortie du détendeur 8, le fluide est à plus basse pression et avantageusement à l'état liquide. Le fluide frigorigène est dirigé à travers la vanne 12 vers le premier échangeur thermique 2.

Au niveau du deuxième nœud de liaison 16, la partie de fluide frigorigène en provenance du deuxième échangeur 3 et la partie de fluide frigorigène en provenance du troisième échangeur 4 se mélangent avant d'entrer dans le premier échangeur thermique 2. La totalité du fluide frigorigène, à l'état liquide et à basse pression, circule à travers premier échangeur thermique 2, à l'intérieur duquel le fluide frigorigène s'évapore en captant de la chaleur au fluide caloporteur circulant au secondaire du premier échangeur thermique 2.

Le circuit primaire du premier échangeur thermique 2 se trouve alimenté en fluide frigorigène à l'état gazeux et à basse pression, et fonctionne en évaporateur de fluide frigorigène. La puissance frigorifique produite par la machine thermodynamique 100 est fournie à la charge thermique 200. La flèche 203 représente une extraction de chaleur depuis la charge thermique 200 vers le circuit frigorigène 1. Une partie de la puissance calorifique rejetée par la machine est transférée à la source géothermique 300. La flèche 303 représente une extraction de chaleur depuis le circuit frigorigène 1 vers la source géothermique 300. L'autre partie de la puissance calorifique rejetée à l'extérieur par la machine est transférée à la source aérothermique 400. La flèche 403 représente une extraction de chaleur depuis le circuit frigorigène 1 vers la source aérothermique 400.

De manière avantageuse, la mesure de la température T1 est utilisée pour déterminer la valeur de surchauffe du fluide frigorigène à la sortie de l'échangeur 2. Dans un mode de réalisation privilégié, la mesure de la température T1 est utilisée afin d'imposer la valeur de surchauffe du fluide frigorigène en sortie de l'échangeur 2.

Avantageusement, la mesure de la température T1 est utilisée pour commander le taux d'ouverture du détendeur 7 et le taux d'ouverture du détendeur 8. La mesure de la température T1 est utilisée pour assurer l'évaporation complète du fluide frigorigène dans le primaire de l'échangeur 2. De manière particulièrement avantageuse, la mesure de température est associée à une mesure de la pression PBP pour mieux contrôler la valeur de la surchauffe.

Il est avantageux de contrôler le taux d'ouverture du détendeur 7 par rapport au taux d'ouverture du détendeur 8 afin de réguler la proportion de fluide traversant le deuxième échangeur thermique 3 et le détendeur 7 par rapport à la proportion de fluide traversant le troisième échangeur thermique 4 et le détendeur 8. Le contrôle des proportions relatives de fluide frigorigène traversant les deux échangeurs thermiques 3 et 4 permet d'ajuster d'une part la puissance calorifique transférée à la source géothermique 300 à travers le deuxième échangeur 3 et d'autre part la puissance calorifique transférée à la source aérothermique 400 à travers le troisième échangeur 4.

En contrôlant les degrés d'ouverture respectifs du détendeur 7 et du détendeur 8, il est possible d'ajuster les proportions relatives d'énergie calorifique évacuées respectivement vers la source géothermique 300 et vers la source aérothermique 400.

De manière avantageuse, la mesure combinée des températures TGEO et TAIR est utilisée pour déterminer à chaque instant laquelle des deux ressources 300 et 400 est la plus favorable pour assurer le niveau de performance énergétique maximal. En comparant les deux températures mesurées TGEO et TAIR, le circuit de commande 500 peut sélectionner l'une ou l'autre des deux ressources 300 et 400 et fermer totalement l'un ou l'autre des deux détendeurs 8 et 7, plaçant ainsi la machine thermodynamique 100 dans un mode de fonctionnement où seule la ressource la plus favorable est exploitée. La comparaison permet de déterminer quelle température parmi l'air ambiant et la source géothermique est la plus proche de la température requise pour la charge thermique 200. Le circuit de commande 500 utilise alors l'échangeur de chaleur associé à la source thermique ayant la température la plus proche de la température recherchée.

La figure 4B représente un mode de fonctionnement particulier dans lequel seule la source géothermique 300 est exploitée. Le détendeur 8 est totalement fermé, bloquant ainsi la circulation du fluide frigorigène dans le troisième échangeur 4, au travers duquel aucun échange thermique n'a lieu. Le fluide frigorigène sortant du compresseur 5 circule dans sa totalité dans le second échangeur thermique 3 puis dans le détendeur 7.

La machine thermodynamique 100 permet de prélever de l'énergie frigorifique uniquement à la source géothermique 300 à travers le deuxième échangeur thermique 3, lorsque l'exploitation de la source géothermique 300 est plus favorable pour le niveau de performance de la machine que l'exploitation de la source aérothermique 400.

La figure 4C représente un mode de fonctionnement dans lequel seule la source aérothermique 400 est exploitée. Dans ce cas particulier, le détendeur 7 est totalement fermé, bloquant ainsi la circulation du fluide frigorigène dans le deuxième échangeur 3, au travers duquel aucun échange thermique n'a lieu. Le fluide frigorigène sortant du compresseur 5 circule donc dans sa totalité dans le troisième échangeur thermique 4 puis à travers le détendeur 8.

Ainsi la machine thermodynamique 100, permet de prélever de l'énergie frigorifique uniquement à la source aérothermique 400 lorsque l'exploitation de la source aérothermique 400 est plus favorable pour le niveau de performance de la machine que l'exploitation de la source géothermique 300.

La figure 5 illustre un mode de fonctionnement qui assure la charge de la source géothermique 300. La machine thermodynamique permet de puiser de l'énergie calorifique depuis la source aérothermique 400 et d'introduire ces calories dans la source géothermique 300.

La vanne quatre-voie 9 est dans sa deuxième configuration et le détendeur 7 est fermé. Les premier et deuxième dispositifs de commutation sont dans la deuxième configuration.

Les premier et deuxième dispositifs de commutation relient la sortie du compresseur 5 avec l'entrée du compresseur 5 de sorte que le fluide frigorigène passe successivement à travers le deuxième échangeur thermique 3, qui fonctionne alors en condenseur, puis à travers le troisième échangeur thermique 4, qui fonctionne en évaporateur. La chaleur est récupérée depuis la source aérothermique 400 et elle est évacuée vers la source géothermique 300. Ainsi, il est possible de recharger en énergie calorifique la source géothermique 300 depuis la source aérothermique 400. La flèche 303 représente une fourniture de chaleur depuis le circuit frigorigène 1 vers la source géothermique 300. La flèche 403 représente une extraction de chaleur depuis la source aérothermique 400 vers le circuit frigorigène 1.

Le fluide frigorigène, en phase vapeur et à haute pression, en sortie du compresseur 5, est dirigé à travers la vanne 9 vers le deuxième échangeur thermique 3, où il se condense en cédant de la chaleur au fluide caloporteur circulant au secondaire du deuxième échangeur thermique l'échangeur 3. Le fluide frigorigène ressort du deuxième échangeur 3 à une température plus basse et avantageusement à l'état liquide et à haute pression. A la sortie du deuxième échangeur thermique 3, le fluide frigorigène est dirigé à travers la vanne 13 ouverte vers le détendeur 8, dans lequel le fluide frigorigène subit un abaissement de sa pression. A la sortie du détendeur 8, le fluide est à basse pression et avantageusement à l'état liquide. Le fluide frigorigène est dirigé vers le troisième échangeur thermique 4 à l'intérieur duquel le fluide frigorigène s'évapore en captant de la chaleur à l'air circulant au secondaire du troisième échangeur 4.

A la sortie du primaire du troisième échangeur 4, le fluide frigorigène est majoritairement à l'état gazeux et à basse pression, et rejoint le réservoir 14 à travers la vanne 11 ouverte.

De manière avantageuse, la mesure de la température T3 est utilisée pour déterminer la valeur de surchauffe du fluide frigorigène à la sortie de l'échangeur 4. Dans un mode de réalisation privilégié, la mesure de la température T3 est utilisée afin d'imposer la valeur de surchauffe du fluide frigorigène en sortie de l'échangeur 4.

Avantageusement, la mesure de la température T3 est utilisée pour commander le taux d'ouverture du détendeur 8. La mesure de la température T3 est utilisée pour assurer l'évaporation complète du fluide frigorigène dans le primaire de l'échangeur 4. De manière particulièrement avantageuse, la mesure de la température T3 est associée à une mesure de la pression PBP pour mieux contrôler la valeur de la surchauffe.

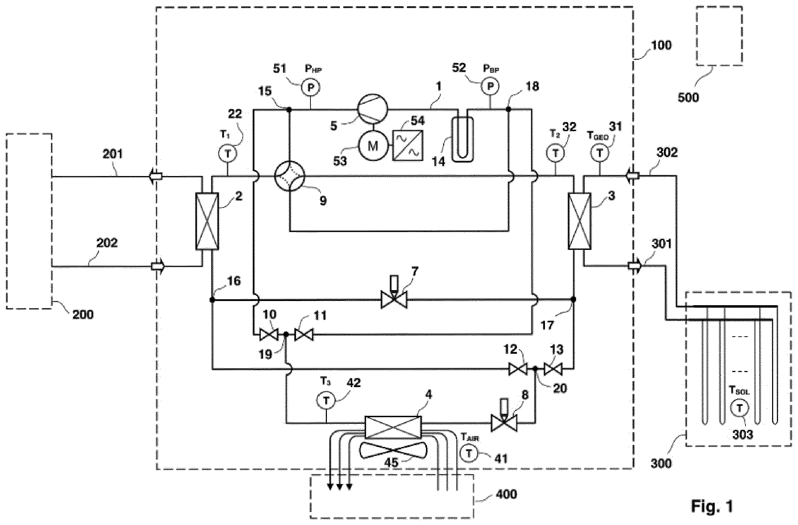

La configuration illustrée aux figures 1 à 5 est particulièrement avantageuse, car elle est compacte. Les premier, deuxième, troisième et quatrième nœuds de liaison peuvent être simplement des nœuds de raccordement et être dépourvus de vannes. Les dispositifs de commutations peuvent être formés par une ou plusieurs vannes. Une telle machine permet de réaliser simplement une production frigorifique ou calorifique pour une charge thermique 200 en utilisant une ou plusieurs sources externes. Une telle machine permet également de gérer l'évolution de la température de la source géothermique en réalisant des phases de charge et de décharge depuis la source aérothermique.

Dans les modes de réalisation précédents un seul circuit frigorigène est illustré et utilisé pour obtenir les multiples modes de fonctionnement décrits. Il est possible d'avoir une machine thermodynamique 100 qui possède deux circuits frigorigènes ou plus de deux circuits frigorigènes.

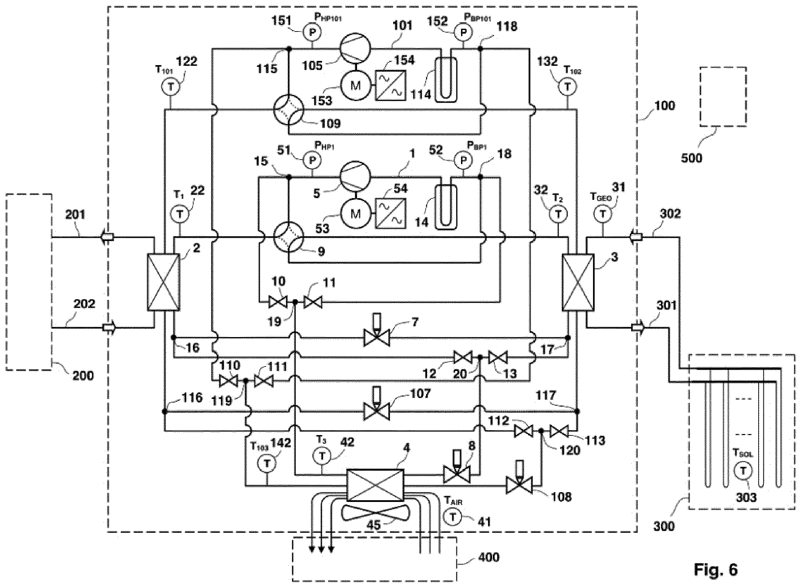

La figure 6 représente schématiquement un autre mode de réalisation d'une machine thermodynamique 100 comportant deux circuits frigorigènes distincts 1 et 101. Chaque circuit frigorigène 1/101 alimente un primaire des multiples échangeurs de chaleur. Le premier circuit frigorigène 1 est identique à celui décrit précédemment en relation avec les modes de réalisation illustrés aux figures 1 à 5 dans sa configuration et dans ses éléments constitutifs.

Le deuxième circuit frigorigène 101 relie les primaires des multiples échangeurs de chaleur afin de pouvoir assurer le transfert des calories.

Le deuxième circuit frigorigène 101 est avantageusement identique au premier circuit frigorigène 1. Il comporte un deuxième dispositif de gestion du fluide frigorigène 109 avantageusement identique au premier dispositif de gestion du fluide frigorigène 9 et un deuxième compresseur 105 préférentiellement disposé dans une deuxième canalisation qui relie la deuxième voie et la première voie du deuxième dispositif de gestion 109. Le deuxième circuit frigorigène 101 comporte également des troisième et quatrième détendeurs 107, 108 disposés de manière identique à ceux du premier circuit frigorigène 1. Les caractéristiques techniques des éléments formant le deuxième circuit frigorigène 101 peuvent reprendre les caractéristiques déjà indiquées plus haut pour le premier circuit frigorigène 1. Le deuxième circuit frigorigène 101 comporte quatre nœuds de liaison 115, 116, 117, 118 disposés de manière identique et des troisième et quatrième dispositifs de commutation disposés de manière identique à ceux du premier circuit frigorigène 1. Le deuxième circuit frigorigène 101 peut également comporter un deuxième réservoir 114, ainsi que des capteurs de température équivalents à ce qui a été décrit dans le premier circuit frigorigène. Le circuit frigorigène 101 comprend avantageusement un capteur de pression 151 configuré pour mesurer la pression PHP101 en sortie du compresseur 105. Le circuit frigorigène 101 peut également comporter un autre capteur de pression 152 configuré pour mesurer la pression PBP101 en entrée du compresseur 105. Tous ces capteurs sont connectés au circuit de commande.

Le second circuit frigorigène 101 permet la circulation d'un second fluide frigorigène qui peut être identique ou différent au premier fluide frigorigène dans sa composition.

Le second circuit frigorigène 101 comporte un premier capteur de température du fluide frigorigène 122 configuré pour mesurer la température T101 en sortie du second circuit primaire du premier échangeur 2 lorsque celui-ci fonctionne en évaporateur. Le second circuit frigorigène 101 comporte un deuxième capteur de température du fluide frigorigène 132 configuré pour mesurer la température T102 du fluide frigorigène en sortie du second circuit primaire du deuxième échangeur 3 lorsque celui-ci fonctionne en évaporateur. Le second circuit frigorigène 101 comporte un troisième capteur de température du fluide frigorigène 142, configuré pour mesurer la température T103 du fluide frigorigène en sortie du second circuit primaire du troisième échangeur 4 lorsque celui-ci fonctionne en évaporateur. La machine thermodynamique 100 à deux circuits frigorigènes peut fonctionner selon les mêmes modes de production que ceux illustrés aux figures 2A, 2B, 2C, 3, 4A, 4B, 4C et 5. Dans ces cas de figure, les états des premier et troisième dispositifs de commutation sont identiques. Il en est de même pour les états des deuxième et quatrième dispositifs de commutation. Les deux dispositifs de gestions 9 et 109 sont également dans le même état. Ainsi, les schémas des deux circuits frigorigènes sont identiques. Les deux fluides frigorigènes circulent de manière identique dans les deux circuits. Le fonctionnement général de la machine thermodynamique est identique à ce qui a été présenté plus haut. Le troisième dispositif de commutation du deuxième circuit frigorigène 101 est équivalent au premier dispositif de commutation du premier circuit frigorigène 1. Le quatrième dispositif de commutation du deuxième circuit frigorigène 101 est équivalent au premier dispositif de commutation du premier circuit frigorigène 1.

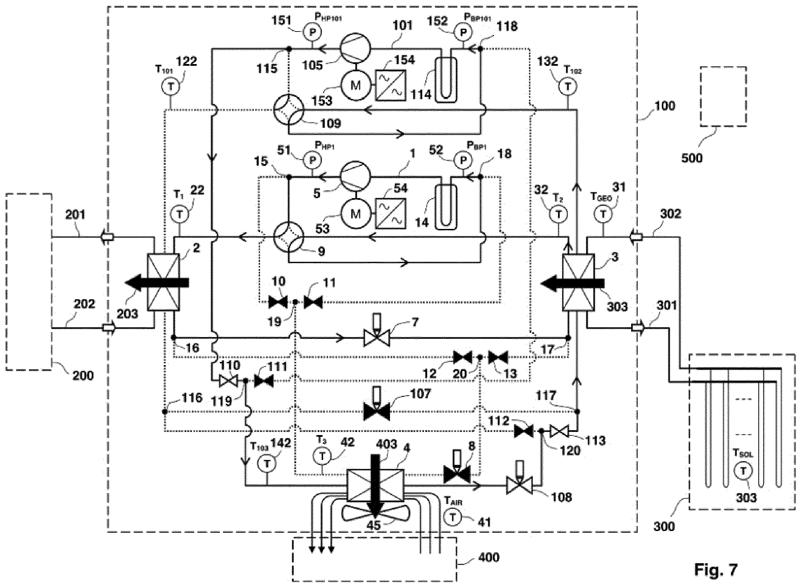

Il est avantageux de prévoir que les deux circuits frigorigènes 1 et 101 fonctionnent de manières différentes. Chacun des deux circuits frigorigènes 1 et 101 peut fonctionner indépendamment selon l'un ou l'autre des quatre modes de fonctionnement que sont le mode production calorifique, le mode décharge de la source géothermique, le mode production frigorifique, le mode recharge de la source géothermique. Les figures 7, 8, 9 et 10 illustrent quatre configurations dans lesquelles les deux circuits frigorigènes 1 et 101 fonctionnent différemment.

La figure 7 illustre une première configuration des circuits frigorigènes 1 et 101. Dans cette première configuration, la machine 100 fournit de l'énergie calorifique à la charge thermique 200 en exploitant la source géothermique 300, tout en effectuant simultanément une décharge de la source géothermique 300 vers la source aérothermique 400. En d'autres termes, les calories prélevées dans la source géothermiques sont évacuées vers la source aérothermique 400 et vers la charge thermique 200.

Le premier circuit frigorigène 1 fonctionne selon le mode de production calorifique dans le cas particulier où seule la source géothermique 300 est exploitée tel qu'il a été expliqué et illustré à la figure 2B pour un seul circuit frigorigène.

Le deuxième circuit frigorigène 101 fonctionne selon le mode de décharge de la source géothermique. Ce mode de fonctionnement du deuxième circuit frigorigène 101 est identique au mode de fonctionnement de la machine thermodynamique 100 à un seul circuit frigorigène, qui est illustré à la figure 3.

Dans le premier circuit frigorigène 1, le premier dispositif de gestion du fluide frigorigène 9 est placé dans sa première configuration, le premier dispositif de commutation est placé dans sa deuxième configuration, le deuxième dispositif de commutation est placé dans sa première configuration, et le détendeur 8 est fermé.

Dans le deuxième circuit frigorigène 101, le deuxième dispositif de gestion du fluide frigorigène 109 est placé dans sa première configuration, le troisième dispositif de commutation est placé dans sa première configuration, le quatrième dispositif de commutation est placé dans sa deuxième configuration, et le troisième détendeur 107 est fermé.

Dans cette première configuration, le premier circuit frigorigène 1 fonctionne avec un premier rendement énergétique correspondant aux températures requises au secondaire du premier échangeur thermique 2 et au secondaire du deuxième échangeur thermique 3. Le second circuit frigorigène 101 fonctionne avec un deuxième rendement énergétique correspondant aux températures requises au secondaire du troisième échangeur thermique 4 et au secondaire du deuxième échangeur thermique 3.

La température à la sortie du secondaire du premier échangeur 2 transférant l'énergie calorifique vers la charge thermique 200 et la température à la sortie du secondaire du troisième échangeur 4 évacuant l'énergie calorifique vers la source aérothermique 400 peuvent être différentes, chacun des deux circuits frigorigènes 1 et 101 fonctionne alors avec son propre rendement. De manière avantageuse, cette configuration est mise en œuvre par le dispositif de contrôle 500 selon les mêmes critères que pour le mode de décharge de la source géothermique 300 de la machine à un seul circuit frigorigène, c'est-à-dire lorsque la température de l'air mesurée TAIR est inférieure à la température du sous-sol au niveau de la source géothermique 300.

La machine thermodynamique 100 à deux circuits frigorigène distincts permet simultanément de fournir une énergie calorifique à la charge thermique 200 et de décharger la source géothermique 300, tout en optimisant le rendement énergétique global de la machine thermodynamique 100.

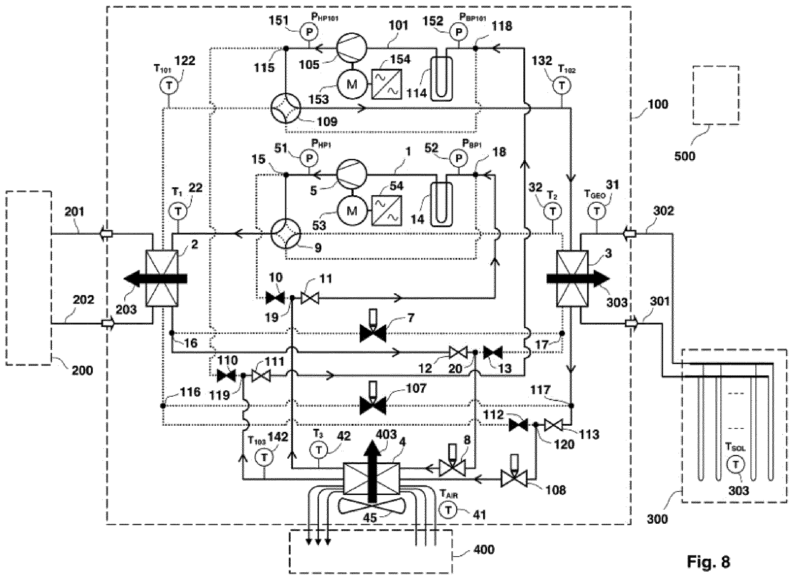

La figure 8 illustre une deuxième configuration où la machine fournit de l'énergie calorifique à la charge thermique 200 en exploitant la source aérothermique 400, tout en effectuant simultanément une recharge de la source géothermique 300 depuis la source aérothermique 400. Les calories sont extraites de la source aérothermique 400 et sont envoyées à la charge thermique 200 et à la source géothermique 300.

Le premier circuit frigorigène 1 fonctionne selon le mode de production calorifique dans le cas particulier où seule la source aérothermique 400 est exploitée. Ce mode de fonctionnement du premier circuit frigorigène 1 est identique au mode de fonctionnement de la machine thermodynamique 100 à un seul circuit frigorigène, expliqué précédemment et qui est illustré à la figure 2C.

Le deuxième circuit frigorigène 101 fonctionne selon le mode de recharge de la source géothermique, c'est-à-dire de manière identique au mode de fonctionnement de la machine thermodynamique 100 à un seul circuit frigorigène, qui est illustré à la figure 5.

Dans le premier circuit frigorigène 1, le dispositif de gestion du fluide frigorigène 9 est placé dans sa première configuration, le premier dispositif de commutation est placé dans sa deuxième configuration, le deuxième dispositif de commutation est placé dans sa première configuration, et le détendeur 7 est fermé. Le détendeur 8 est ouvert.

Dans le deuxième circuit frigorigène 101, le dispositif de gestion du fluide frigorigène 109 est placé dans sa deuxième configuration, le troisième dispositif de commutation est placé dans sa deuxième configuration, le quatrième dispositif de commutation est placé dans sa deuxième configuration, et le détendeur 107 est fermé. Le détendeur 108 est ouvert.

Le circuit frigorigène 1 fonctionne avec un rendement énergétique correspondant aux températures requises au secondaire du premier échangeur thermique 2 et au secondaire du troisième échangeur thermique 4. Le circuit frigorigène 101 fonctionne avec un rendement énergétique correspondant aux températures requises au secondaire du deuxième échangeur thermique 3 et au secondaire du troisième échangeur thermique 4.

La température à la sortie du secondaire du premier échangeur 2 pour transférer l'énergie calorifique vers la charge thermique 200 et la température requise à la sortie du secondaire du deuxième échangeur 3 pour transférer l'énergie calorifique à la source géothermique 300 sont différentes, chacun des deux circuits frigorigènes 1 et 101 fonctionne avec son propre rendement. Cette combinaison pourra être activée par le dispositif de contrôle 500 selon les mêmes critères que pour le mode de recharge de la source géothermique 300 de la machine à un seul circuit frigorigène, c'est-à-dire lorsque la température de l'air mesurée TAIR est supérieure à la température du sous-sol au niveau de la source géothermique 300.

La machine thermodynamique 100 permet simultanément de fournir une énergie calorifique à la charge thermique 200 et de recharger la source géothermique 300, tout en optimisant le rendement énergétique global de la machine thermodynamique 100.

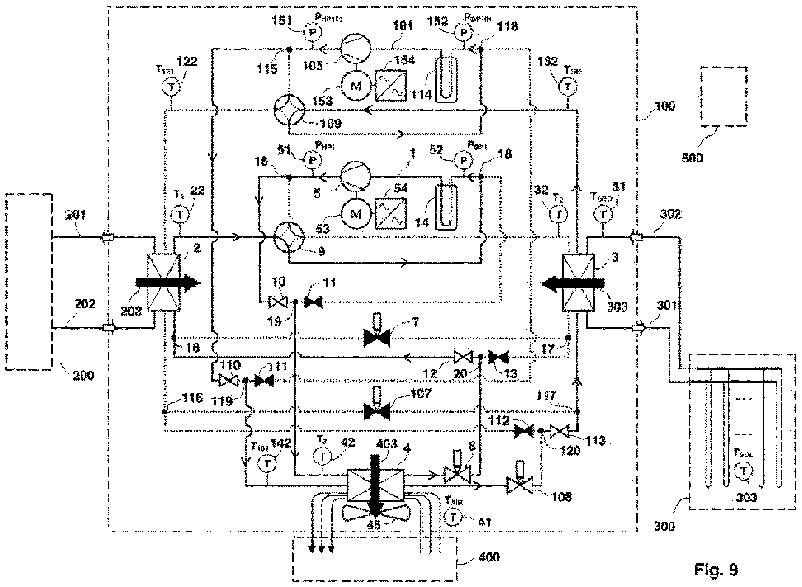

La figure 9 illustre une troisième configuration où la machine fournit de l'énergie frigorifique à la charge thermique 200 en exploitant la source aérothermique 400, tout en effectuant une décharge de la source géothermique 300 vers la source aérothermique 400. En d'autres termes, les calories prélevées de la source géothermique 300 et de la charge thermique 200 sont évacuées par la source aérothermique 400.

Le premier circuit frigorigène 1 fonctionne selon le mode de production frigorifique dans le cas particulier où seule la source aérothermique 400 est exploitée. Ce mode de fonctionnement du premier circuit frigorigène 1 est identique au mode de fonctionnement de la machine thermodynamique 100 à un seul circuit frigorigène, qui est illustré à la figure 4C.

Le deuxième circuit frigorigène 101 fonctionne quant à lui selon le mode de décharge de la source géothermique. Ce mode de fonctionnement du deuxième circuit frigorigène 101 est identique au mode de fonctionnement de la machine thermodynamique 100 à un seul circuit frigorigène, qui est illustré à la figure 3. Dans le premier circuit frigorigène 1, le dispositif de gestion du fluide frigorigène 9 est placé dans sa deuxième configuration, le premier dispositif de commutation est placé dans sa première configuration, le deuxième dispositif de commutation est placé dans sa première configuration, et le premier détendeur 7 est fermé. Le deuxième détendeur 8 est ouvert.

Dans le circuit frigorigène 101, le dispositif de gestion du fluide frigorigène 109 est placé dans sa première configuration, le troisième dispositif de commutation est placé dans sa première configuration, le quatrième dispositif de commutation est placé dans sa deuxième configuration, et le troisième détendeur 107 est fermé.

### Le quatrième détendeur 108 est ouvert

Le circuit frigorigène 1 fonctionne avec un rendement énergétique correspondant aux températures présentes au secondaire du troisième échangeur thermique 4 et au secondaire du premier échangeur thermique 2. Le circuit frigorigène 101 fonctionne avec un rendement énergétique correspondant aux températures présentes au secondaire du troisième échangeur thermique 4 et au secondaire du deuxième échangeur thermique 3.

La température à la sortie du secondaire du premier échangeur 2 pour capter l'énergie calorifique depuis la charge thermique 200 et la température à la sortie du secondaire du deuxième échangeur 3 pour capter l'énergie calorifique depuis la source géothermique 300 sont différentes, chacun des deux circuits frigorigènes 1 et 101 fonctionne avec son propre rendement. Ce mode de fonctionnement peut être activé par le dispositif de contrôle 500 selon les mêmes critères que pour le mode de décharge de la source géothermique 300 de la machine à un seul circuit frigorigène.

La machine thermodynamique 100 permet simultanément de fournir une énergie frigorifique à la charge thermique 200 et de décharger la source géothermique 300, tout en optimisant le rendement énergétique global de la machine thermodynamique 100.

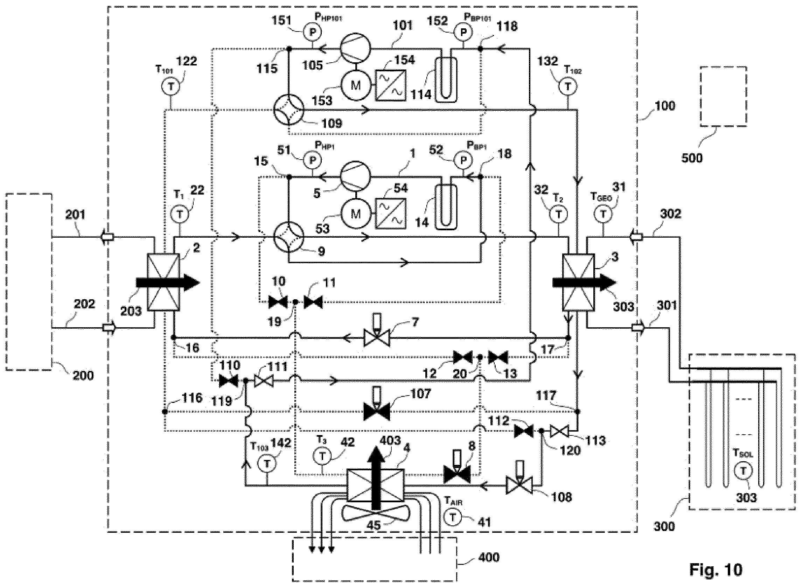

La figure 10 illustre une quatrième configuration où la machine thermodynamique 100 fournit de l'énergie frigorifique à la charge thermique 200 en exploitant la source géothermique 300, tout en effectuant une recharge de la source géothermique 300 depuis la source aérothermique 400. Les calories prélevées à la charge thermique 200 et à la source aérothermique 400 sont transférées à la source géothermique 300.

Le premier circuit frigorigène 1 fonctionne selon le mode de production frigorifique dans le cas particulier où seule la source géothermique 300 est exploitée. Ce mode de fonctionnement du premier circuit frigorigène 1 est identique au mode de fonctionnement de la machine thermodynamique 100 à un seul circuit frigorigène, qui est illustré à la figure 4B.

Le deuxième circuit frigorigène 101 fonctionne quant à lui selon le mode de recharge de la source géothermique. Ce mode de fonctionnement du deuxième circuit frigorigène 101 est identique au mode de fonctionnement de la machine thermodynamique 100 à un seul circuit frigorigène, qui est illustré à la figure 5. Dans le premier circuit frigorigène 1, le dispositif de gestion du fluide frigorigène 9 est placé dans sa deuxième configuration, le premier dispositif de commutation est placé dans sa première configuration, le deuxième dispositif de commutation est placé dans sa première configuration, et le deuxième détendeur 8 est fermé. Le premier détendeur 7 est ouvert.

Dans le deuxième circuit frigorigène 101, le deuxième dispositif de gestion du fluide frigorigène 109 est placé dans sa deuxième configuration, le troisième dispositif de commutation est placé dans sa deuxième configuration, le quatrième dispositif de commutation est placé dans sa deuxième configuration, et le troisième détendeur 107 est fermé. Le quatrième détendeur 108 est ouvert.

Le circuit frigorigène 1 fonctionne avec un rendement énergétique correspondant aux températures présentes au secondaire du deuxième échangeur thermique 3 et au secondaire du premier échangeur thermique 2. Le circuit frigorigène 101 fonctionne quant à lui avec un rendement énergétique correspondant aux températures présentes au secondaire du deuxième échangeur thermique 3 et au secondaire du troisième échangeur thermique 4.

La température à la sortie du secondaire du premier échangeur 2 pour transférer l'énergie frigorifique vers la charge thermique 200 et la température à la sortie du secondaire du troisième échangeur 4 pour capter l'énergie calorifique depuis la source aérothermique 400 sont différentes, chacun des deux circuits frigorigènes 1 et 101 fonctionne avec son propre rendement. Cette combinaison pourra être activée par le dispositif de contrôle 500 selon les mêmes critères que pour le mode de recharge de la source géothermique 300 de la machine à un seul circuit frigorigène.

Ainsi la machine thermodynamique 100 à deux circuits frigorigènes permet simultanément de fournir une énergie frigorifique à la charge thermique 200 et de recharger la source géothermique 300, tout en optimisant le rendement énergétique global de la machine thermodynamique 100.

La machine thermodynamique 100 permet de fournir de l'énergie calorifique ou de l'énergie frigorifique à la charge thermique 200, en exploitant l'énergie calorifique ou frigorifique soit d'une source géothermique 300, soit d'une source aérothermique 400, soit simultanément des deux sources géothermique et aérothermique. La machine thermodynamique 100 permet de sélectionner à chaque instant entre les sources géothermique et aérothermique la source qui sera exploitée avec le meilleur rendement énergétique selon que le circuit de commande constate que la température TAIR est supérieure à la température TGEO ou que la température TAIR est inférieure à la température TGEO.

Le circuit de commande 500 est configuré pour gérer de façon active la source géothermique 300. Le circuit de commande peut suivre l'état de la source géothermique soit à l'aide de la température TSOL mesurée par le troisième capteur de température 303, soit à l'aide de la température TGEO mesurée par le premier capteur 31 combiné au circuit d'estimation. Le circuit de commande effectue à certaines périodes de l'année une recharge ou une décharge en énergie calorifique de la source géothermique depuis la source aérothermique, c'est-à-dire un apport ou une extraction de calories. Lorsque le circuit de commande 500 constate que l'écart entre la température de la source géothermique et la température prévisionnelle atteint un écart seuil, le circuit de commande active une phase de recharge ou une phase de décharge. Lorsque la température de la source géothermique est inférieure à la température prévisionnelle et que la température de l'air ambiant est supérieure à la température de la source géothermique, le circuit de commande active le transfert des calories depuis la source aérothermique vers la source géothermique. Lorsque la température de la source géothermique est supérieure à la température prévisionnelle et que la température de l'air ambiant est inférieure à la température de la source géothermique, le circuit de commande active le transfert des calories depuis la source géothermique vers la source aérothermique.

En utilisant plusieurs circuits frigorigènes, il est possible de fournir de l'énergie calorifique ou de l'énergie frigorifique à la charge thermique 200 en exploitant la source géothermique 300 ou la source aérothermique 400 qui conduit au meilleur rendement énergétique, tout en effectuant une recharge calorifique ou frigorifique de la source géothermique 300 depuis la source aérothermique, cette dernière opération pouvant être réalisée avec un haut rendement énergétique dès lors que les conditions de l'air ambiant sont favorables. Les mêmes critères utilisant la comparaison des températures TAIR et TGEO sont utilisés.

De manière avantageuse, la machine thermodynamique 100 est configurée pour produire une énergie calorifique sur la charge thermique 200 pour des applications de chauffage et/ou de production d'eau chaude sanitaire, par exemple nécessitant le chauffage d'un fluide caloporteur à une température comprise entre 20°C et 100°C. La machine thermodynamique est également configurée pour produire une énergie frigorifique pour des applications de refroidissement d'un fluide caloporteur de préférence dans la gamme 0°C - 20°C.

Bien que l'invention ait été décrite en référence à un mode de réalisation particulier, elle n'est nullement limitée à ce mode de réalisation. L'invention est définie par les revendications ci-jointes.

## Revendications

1. Machine thermodynamique, comportant :
- un premier échangeur de chaleur (2) destiné à coopérer avec une charge thermique (200) et possédant au moins un circuit primaire et au moins un circuit secondaire ;
- un deuxième échangeur de chaleur (3) destiné à coopérer avec une source géothermique (300) et possédant au moins un circuit primaire et au moins un circuit secondaire ;
- un troisième échangeur de chaleur (4) destiné à coopérer avec une source aérothermique (400) et possédant au moins un circuit primaire et au moins un circuit secondaire ;
- un compresseur (5) et des premier et deuxième détendeurs (7, 8) ;
au moins un premier circuit frigorigène (1) à l'intérieur duquel circule au moins un fluide frigorigène, le au moins un premier circuit frigorigène (1) connectant les circuits primaires du premier échangeur de chaleur (2), du deuxième échangeur de chaleur (3) et du troisième échangeur de chaleur (4), le compresseur (5) et les premier et deuxième détendeurs (7, 8) ;
dans laquelle le au moins un premier circuit frigorigène (1) comporte :
- un premier dispositif de gestion du fluide frigorigène (9) et un premier dispositif de commutation (10, 11, 19);
- un premier nœud de liaison (15) reliant la sortie du compresseur (5) au premier dispositif de gestion du fluide frigorigène (9) et au premier dispositif de commutation (10, 11, 19) ;
- un deuxième nœud de liaison (16) reliant une deuxième entrée/sortie du premier échangeur de chaleur (2) à une première borne du premier détendeur (7);
- un troisième nœud de liaison (17) reliant une deuxième entrée/sortie du deuxième échangeur de chaleur (3) à une deuxième borne du premier détendeur (7);
- un quatrième nœud de liaison (18) reliant l'entrée du compresseur (5) au dispositif de gestion du fluide frigorigène (9);
dans laquelle le premier dispositif de gestion du fluide frigorigène (9) est configuré pour définir sélectivement une première configuration ou une seconde configuration,
- la première configuration reliant la sortie du compresseur (5) avec une première entrée/sortie du premier échangeur de chaleur (2) et reliant l'entrée du compresseur (5) avec une première entrée/sortie du deuxième échangeur de chaleur (3) et
- la deuxième configuration reliant la sortie du compresseur (5) avec la première entrée/sortie du deuxième échangeur de chaleur (3) et reliant l'entrée du compresseur (5) avec la première entrée/sortie du premier échangeur de chaleur (2) ;
dans laquelle le premier dispositif de commutation (10, 11, 19) est configuré pour définir sélectivement une première configuration ou une seconde configuration, la première configuration reliant le premier nœud de liaison (15) à la première entrée/sortie du troisième échangeur de chaleur (4), la deuxième configuration reliant la première entrée/sortie du troisième échangeur de chaleur (4) au quatrième nœud de liaison (18) ;
**caractérisée en ce que** :
- le au moins un premier circuit frigorigène (1) comporte, en outre, un deuxième dispositif de commutation (12, 13, 20) ;
- le deuxième nœud de liaison (16) relie la deuxième entrée/sortie du premier échangeur de chaleur (2) à la première borne du premier détendeur (7) et au deuxième dispositif de commutation (12, 13, 20) ;
- le troisième nœud de liaison (17) relie la deuxième entrée/sortie du deuxième échangeur de chaleur (3) à la deuxième borne du premier détendeur (7) et au deuxième dispositif de commutation (12, 13, 20) ;
- le quatrième nœud de liaison (18) relie l'entrée du compresseur (5) au dispositif de gestion du fluide frigorigène (9) et au premier dispositif de commutation (10, 11, 19);
- la première configuration du premier dispositif de commutation (10, 11, 19) empêche la circulation du fluide frigorigène avec le quatrième nœud de liaison (18), et la deuxième configuration du premier dispositif de commutation (10, 11, 19) empêche la circulation du fluide frigorigène avec le premier nœud de liaison (15) ; et **en ce que**
- le deuxième dispositif de commutation (12, 13, 20) est configuré pour définir sélectivement une première configuration ou une seconde configuration, la première configuration reliant le deuxième nœud de liaison (16) à la deuxième entrée/sortie du troisième échangeur de chaleur (4) via le deuxième détendeur (8) et empêchant la circulation du fluide frigorigène avec le troisième nœud de liaison (17), la deuxième configuration reliant la deuxième entrée/sortie du troisième échangeur de chaleur (4) au troisième nœud de liaison (17) via le deuxième détendeur (8) et empêchant la circulation du fluide frigorigène avec le deuxième nœud de liaison (16).

2. Machine thermodynamique selon la revendication précédente, **caractérisée en ce qu'**elle comporte un circuit de commande (500) configuré pour définir sélectivement :
- un premier mode de fonctionnement dans lequel le premier dispositif de commutation (10, 11, 19) est dans la deuxième configuration, le deuxième dispositif de commutation (12, 13, 20) et le dispositif de gestion du fluide frigorigène (9) étant dans la première configuration pour transférer des calories de la source géothermique et/ou de la source aérothermique (400) vers la charge thermique (200) ;
- un deuxième mode de fonctionnement dans lequel le deuxième dispositif de commutation (12, 13, 20) est dans la deuxième configuration, le premier dispositif de commutation (10, 11, 19) et le dispositif de gestion du fluide frigorigène (9) étant dans la première configuration pour transférer des calories de la source géothermique (300) vers la source aérothermique (400) ;
- un troisième mode de fonctionnement dans lequel le dispositif de gestion du fluide frigorigène (9) est dans la deuxième configuration, le premier dispositif de commutation (10, 11, 19) et le deuxième dispositif de commutation (12, 13, 20) étant dans la première configuration pour transférer des calories de la charge thermique (200) vers la source géothermique (300) et/ou la source aérothermique (400) ;
- un quatrième mode de fonctionnement dans lequel le dispositif de gestion du fluide frigorigène (9), le premier dispositif de commutation (10, 11, 19) et le deuxième dispositif de commutation (12, 13, 20) sont dans la deuxième configuration pour transférer des calories de la source aérothermique (400) vers la source géothermique (300).

3. Machine thermodynamique selon la revendication précédente, comportant :
- un premier capteur de température (31) configuré pour mesurer la température (TGEO) à l'entrée du au moins un circuit secondaire du deuxième échangeur de chaleur (3) ;
- un deuxième capteur de température (41) configuré pour mesurer la température (TAIR) à l'entrée du au moins un circuit secondaire du troisième échangeur de chaleur (4) ;
dans laquelle le premier détendeur (7) et le second détendeur (8) sont à taux d'ouverture variable et dans laquelle le circuit de commande (500) est configuré pour contrôler le taux d'ouverture du premier détendeur (7) et le taux d'ouverture du second détendeur (8) et ajuster la puissance calorifique ou frigorifique transmise respectivement à travers le deuxième échangeur de chaleur (3) et le troisième échangeur de chaleur (4) en fonction des valeurs de températures (TGEO, TAIR) mesurées à l'entrée du au moins un circuit secondaire du deuxième échangeur de chaleur (3) et à l'entrée du au moins un circuit secondaire du troisième échangeur de chaleur (4).

4. Machine thermodynamique selon la revendication précédente, **caractérisée en ce que** le circuit de commande (500) est configuré pour fermer le premier détendeur (7) dans le premier mode de fonctionnement quand le circuit de commande (500) constate que la valeur de température (TGEO) à l'entrée du au moins un circuit secondaire du deuxième échangeur de chaleur (3) est inférieure à la valeur de température (TAIR) à l'entrée du au moins un circuit secondaire du troisième échangeur de chaleur (4).

5. Machine thermodynamique selon la revendication précédente, **caractérisée en ce que** le circuit de commande (500) est configuré pour fermer le deuxième détendeur (8) dans le premier mode de fonctionnement quand le circuit de commande (500) constate que la valeur de température (TGEO) à l'entrée du au moins un circuit secondaire du deuxième échangeur de chaleur (3) est supérieure à la valeur de température (TAIR) à l'entrée du au moins un circuit secondaire du troisième échangeur de chaleur (4).

6. Machine thermodynamique selon l'une des revendications 3 à 5, **caractérisée en ce que** le circuit de commande (500) est configuré pour fermer le premier détendeur (7) dans le troisième mode de fonctionnement quand le circuit de commande (500) constate que la valeur de température (TGEO) à l'entrée du au moins un circuit secondaire du deuxième échangeur de chaleur (3) est supérieure à la valeur de température (TAIR) à l'entrée du au moins un circuit secondaire du troisième échangeur de chaleur (4).

7. Machine thermodynamique selon la revendication précédente, **caractérisée en ce que** le circuit de commande (500) est configuré pour fermer le deuxième détendeur (8) dans le troisième mode de fonctionnement quand le circuit de commande (500) constate que la valeur de température (TGEO) à l'entrée du au moins un circuit secondaire du deuxième échangeur de chaleur (3) est inférieure à la valeur de température (TAIR) à l'entrée du au moins un circuit secondaire du troisième échangeur de chaleur (4).

8. Machine thermodynamique selon l'une des revendications 2 à 7, comportant des moyens de mesure de la température de la source géothermique (300) et dans laquelle le circuit de commande (500) comporte un modèle prévisionnel de la température de la source géothermique (300) dans le temps, le circuit de commande (500) étant configuré pour activer le second mode de fonctionnement ou le quatrième mode de fonctionnement lorsque le circuit de commande (500) constate que la température de la source géothermique (300) s'écarte de la température du modèle prévisionnel au-delà d'une valeur seuil.

9. Machine thermodynamique selon la revendication précédente dans laquelle les moyens de mesure de la température de la source géothermique (300) sont formés par le premier capteur de température (31) et un dispositif d'estimation configuré pour estimer la température de la source géothermique à partir de la température (TGEO) à l'entrée du au moins un circuit secondaire du deuxième échangeur de chaleur (3).

10. Machine thermodynamique selon la revendication 8 dans laquelle les moyens de mesure de la température de la source géothermique (300) sont formés par un troisième capteur de température (303) destiné à être installé dans le sous-sol à proximité de la source géothermique.

11. Machine thermodynamique selon l'une des revendications 8 à 9, dans laquelle le circuit de commande (500) est configuré pour activer le second mode de fonctionnement seulement lorsque le circuit de commande (500) constate que la température (TAIR) à l'entrée du au moins un circuit secondaire du troisième échangeur de chaleur (4) est inférieure à la température (TGEO) à l'entrée du au moins un circuit secondaire du deuxième échangeur de chaleur (3) et/ou pour activer le quatrième mode de fonctionnement seulement lorsque le circuit de commande (500) constate que la température (TAIR) à l'entrée du au moins un circuit secondaire du troisième échangeur de chaleur (4) est supérieure à la température (TGEO) à l'entrée du au moins un circuit secondaire du deuxième échangeur de chaleur (3).

12. Machine thermodynamique selon l'une des revendications précédentes, **caractérisée en ce qu'**elle comporte un second circuit frigorigène (101) distinct du premier circuit frigorigène (1) à l'intérieur duquel circule un second fluide frigorigène, le second circuit frigorigène (101) connectant le premier échangeur de chaleur (2), le deuxième échangeur de chaleur (3) et le troisième échangeur de chaleur (4), le second circuit frigorigène (101) possédant un deuxième dispositif de gestion du fluide frigorigène (109), un compresseur (105), un premier détendeur (107) et un deuxième détendeur (108), un premier nœud de liaison (115), un deuxième nœud de liaison (116), un troisième nœud de liaison (117), un quatrième nœud de liaison (118), un premier dispositif de commutation (110, 111, 119), un deuxième dispositif de commutation (112, 113, 120) agencés de manière semblable au premier circuit frigorigène (1).

13. Machine thermodynamique selon la combinaison des revendications 2 et 12, **caractérisée en ce que** le circuit de commande (500) est configuré pour définir sélectivement pour le second circuit frigorigène (101) des premier, deuxième, troisième et quatrièmes modes de fonctionnement semblables aux premier, deuxième, troisième et quatrième modes de fonctionnement du premier circuit frigorigène (1).

14. Machine thermodynamique selon la revendication précédente, **caractérisée en ce que** le circuit de commande (500) est configuré pour définir une configuration dans laquelle le premier circuit frigorigène (1) est dans le premier mode de fonctionnement, le second détendeur (8) du premier circuit frigorigène (1) étant maintenu fermé, et le second circuit frigorigène (101) est dans le deuxième mode de fonctionnement.

15. Machine thermodynamique selon l'une des revendications 13 et 14, **caractérisée en ce que** le circuit de commande (500) est configuré pour définir une configuration dans laquelle le premier circuit frigorigène (1) est dans le premier mode de fonctionnement, le premier détendeur (7) du premier circuit frigorigène (1) étant maintenu fermé, et le second circuit frigorigène (101) est dans le quatrième mode de fonctionnement.

16. Machine thermodynamique selon l'une quelconque des revendications 13 à 15, **caractérisée en ce que** le circuit de commande (500) est configuré pour définir une configuration dans laquelle le premier circuit frigorigène (1) est dans le troisième mode de fonctionnement, le premier détendeur (7) du premier circuit frigorigène (1) étant maintenu fermé, et le second circuit frigorigène (101) est dans le deuxième mode de fonctionnement.

17. Machine thermodynamique selon l'une quelconque des revendications 13 à 16, **caractérisée en ce que** le circuit de commande (500) est configuré pour définir une configuration dans laquelle le premier circuit frigorigène (1) est dans le troisième mode de fonctionnement, le second détendeur (8) du premier circuit frigorigène (1) étant maintenu fermé, et le second circuit frigorigène (101) est dans le quatrième mode de fonctionnement.

18. Procédé de fonctionnement d'une machine thermodynamique comportant les étapes :
- Fournir une machine thermodynamique selon l'une des revendications 1 à 11;
- Faire fonctionner la machine thermodynamique dans un mode de fonctionnement choisi parmi :
i) un montage parallèle du troisième échangeur de chaleur (4) et du deuxième échangeur de chaleur (3), le troisième échangeur de chaleur (4) et le deuxième échangeur de chaleur (3) fonctionnant en évaporateurs, entre la sortie du premier échangeur de chaleur (2) qui fonctionne en condenseur de fluide frigorigène, et l'entrée du compresseur (5),
ii) un montage série du troisième échangeur de chaleur (4) qui fonctionne en condenseur de fluide frigorigène, et du deuxième échangeur de chaleur (3) qui fonctionne en évaporateur de fluide frigorigène, entre la sortie du compresseur (5) et l'entrée du compresseur (5),
iii) un montage parallèle du troisième échangeur de chaleur (4) et du deuxième échangeur de chaleur (3), le troisième échangeur de chaleur (4) et le deuxième échangeur de chaleur (3) fonctionnant en condenseurs de fluide frigorigène, entre la sortie du compresseur (5) et l'entrée du premier échangeur de chaleur (2) qui fonctionne en évaporateur de fluide frigorigène,
iv) un montage série du deuxième échangeur de chaleur (3) qui fonctionne en condenseur de fluide frigorigène, et du troisième échangeur de chaleur (4) qui fonctionne en évaporateur de fluide frigorigène, entre la sortie du compresseur (5) et l'entrée du compresseur (5).

19. Procédé de fonctionnement d'une machine thermodynamique comportant les étapes :
- Fournir une machine thermodynamique selon l'une des revendications 12 à 19;
- Faire fonctionner la machine thermodynamique dans au moins un des modes de réalisation choisi parmi
i) le premier échangeur de chaleur (2) condense le premier fluide frigorigène, le deuxième échangeur de chaleur (3) vaporise le premier fluide frigorigène et le second fluide frigorigène, le troisième échangeur de chaleur (4) condense le second fluide frigorigène, le premier fluide frigorigène ne passe pas au travers du troisième échangeur de chaleur (4), et le second fluide frigorigène ne passe pas au travers du premier échangeur de chaleur (2) ;
ii) le premier échangeur de chaleur (2) condense le premier fluide frigorigène, le troisième échangeur de chaleur (4) vaporise le premier fluide frigorigène et le second fluide frigorigène, le deuxième échangeur de chaleur (3) condense le second fluide frigorigène, le premier fluide frigorigène ne passe pas au travers du deuxième échangeur de chaleur (3) et le second fluide frigorigène ne passe pas au travers du premier échangeur de chaleur (2) ;
iii) le premier échangeur de chaleur (2) vaporise le premier fluide frigorigène, le troisième échangeur de chaleur (4) condense le premier fluide frigorigène et le second fluide frigorigène, le deuxième échangeur de chaleur (3) vaporise le second fluide frigorigène, le premier fluide frigorigène ne passe pas au travers du deuxième échangeur de chaleur (3) et le second fluide frigorigène ne passe pas au travers du premier échangeur de chaleur (2) ;
iv) le premier échangeur de chaleur (2) vaporise le premier fluide frigorigène, le deuxième échangeur de chaleur (3) condense le premier fluide frigorigène et le second fluide frigorigène, le troisième échangeur de chaleur (4) vaporise le second fluide frigorigène, le premier fluide frigorigène ne passe pas au travers du troisième échangeur de chaleur (4) et le second fluide frigorigène ne passe pas au travers du premier échangeur de chaleur (2).

## Patentansprüche

1. Thermodynamische Maschine, umfassend:
- einen ersten Wärmetauscher (2), der dazu bestimmt ist, mit einer Wärmelast (200) zusammenzuwirken, und der mindestens einen Primärkreis und mindestens einen Sekundärkreis besitzt;
- einen zweiten Wärmetauscher (3), der dazu bestimmt ist, mit einer geothermischen Quelle (300) zusammenzuwirken, und der mindestens einen Primärkreis und mindestens einen Sekundärkreis besitzt;
- einen dritten Wärmetauscher (4), der dazu bestimmt ist, mit einer aerothermischen Quelle (400) zusammenzuwirken, und der mindestens einen Primärkreis und mindestens einen Sekundärkreis besitzt;
- einen Kompressor (5) und erste und zweite Druckminderer (7, 8);
- mindestens einen ersten Kältemittelkreislauf (1), in dem mindestens ein Kältemittel zirkuliert, wobei der mindestens eine erste Kältemittelkreislauf (1) die Primärkreise des ersten Wärmetauschers (2), des zweiten Wärmetauschers (3) und des dritten Wärmetauschers (4), den Kompressor (5) und die ersten und zweiten Druckminderer (7, 8) verbindet;
wobei der mindestens eine erste Kältemittelkreislauf (1) umfasst:
- eine erste Steuerungsvorrichtung des Kältemittels (9) und eine erste Umschaltvorrichtung (10, 11, 19);
- einen ersten Verbindungsknoten (15), der den Ausgang des Kompressors (5) mit der ersten Steuerungsvorrichtung des Kältemittels (9) und mit der ersten Umschaltvorrichtung (10, 11, 19) verbindet;
- einen zweiten Verbindungsknoten (16), der einen zweiten Eingang/Ausgang des ersten Wärmetauschers (2) mit einer ersten Anschlussklemme des ersten Druckminderers (7) verbindet;
- einen dritten Verbindungsknoten (17), der einen zweiten Eingang/Ausgang des zweiten Wärmetauschers (3) mit einer zweiten Anschlussklemme des ersten Druckminderers (7) verbindet;
- einen vierten Verbindungsknoten (18), der den Eingang des Kompressors (5) mit der Steuerungsvorrichtung des Kältemittels (9) verbindet;
wobei die erste Steuerungsvorrichtung des Kältemittels (9) eingerichtet ist, um selektiv eine erste Einstellung oder eine zweite Einstellung zu definieren,
- wobei die erste Einstellung den Ausgang des Kompressors (5) mit einem ersten Eingang/Ausgang des ersten Wärmetauschers (2) verbindet und den Eingang des Kompressors (5) mit einem ersten Eingang/Ausgang des zweiten Wärmetauschers (3) verbindet, und
- wobei die zweite Einstellung den Ausgang des Kompressors (5) mit dem ersten Eingang/Ausgang des zweiten Wärmetauschers (3) verbindet und den Eingang des Kompressors (5) mit dem ersten Eingang/Ausgang des ersten Wärmetauschers (2) verbindet;
wobei die erste Umschaltvorrichtung (10, 11, 19) eingerichtet ist, um selektiv eine erste Einstellung oder eine zweite Einstellung zu definieren, wobei die erste Einrichtung den ersten Verbindungsknoten (15) mit dem ersten Eingang/Ausgang des dritten Wärmetauschers (4) verbindet, wobei die zweite Einstellung den ersten Eingang/Ausgang des dritten Wärmetauschers (4) mit dem vierten Verbindungsknoten (18) verbindet;
**dadurch gekennzeichnet, dass**:
- der mindestens eine erste Kältemittelkreislauf (1) ferner eine zweite Umschaltvorrichtung (12, 13, 20) umfasst;
- der zweite Verbindungsknoten (16) den zweiten Eingang/Ausgang des ersten Wärmetauschers (2) mit der ersten Anschlussklemme des ersten Druckminderers (7) und mit der zweiten Umschaltvorrichtung (12, 13, 20) verbindet;
- der dritte Verbindungsknoten (17) den zweiten Eingang/Ausgang des zweiten Wärmetauschers (3) mit der zweiten Anschlussklemme des ersten Druckminderers (7) und mit der zweiten Umschaltvorrichtung (12, 13, 20) verbindet;
- der vierte Verbindungsknoten (18) den Eingang des Kompressors (5) mit der Steuerungsvorrichtung des Kältemittels (9) und der ersten Umschaltvorrichtung (10, 11, 19) verbindet;
- wobei die erste Einstellung der ersten Umschaltvorrichtung (10, 11, 19) die Zirkulation des Kältemittels mit dem vierten Verbindungsknoten (18) verhindert, und wobei die zweite Einstellung der ersten Umschaltvorrichtung (10, 11, 19) die Zirkulation des Kältemittels mit dem ersten Verbindungsknoten (15) verhindert; und dass
- die zweite Umschaltvorrichtung (12, 13, 20) eingerichtet ist, um selektiv eine erste Einstellung oder eine zweite Einstellung zu definieren, wobei die erste Einstellung den zweiten Verbindungsknoten (16) mit dem zweiten Eingang/Ausgang des dritten Wärmetauschers (4) über den zweiten Druckminderer (8) verbindet und die Zirkulation des Kältemittels mit dem dritten Verbindungsknoten (17) verhindert, wobei die zweite Einstellung den zweiten Eingang/Ausgang des dritten Wärmetauschers (4) mit dem dritten Verbindungsknoten (17) über den zweiten Druckminderer (8) verbindet und die Zirkulation des Kältemittels mit dem zweiten Verbindungsknoten (16) verhindert.

2. Thermodynamische Maschine nach dem vorhergehenden Anspruch, **dadurch gekennzeichnet, dass** sie einen Steuerkreis (500) umfasst, der eingerichtet ist, um selektiv zu definieren:
- einen ersten Funktionsmodus, in dem die erste Umschaltvorrichtung (10, 11, 19) in der zweiten Einstellung ist, wobei die zweite Umschaltvorrichtung (12, 13, 20) und die Steuerungsschaltung des Kältemittels (9) in der ersten Einstellung ist, um Kalorien von der geothermischen Quelle und/oder der aerothermischen Quelle (400) zu der Wärmelast (200) weiterzuleiten;
- einen zweiten Funktionsmodus, in dem die zweite Umschaltvorrichtung (12, 13, 20) in der zweiten Einstellung ist, wobei die erste Umschaltvorrichtung (10, 11, 19) und die Steuerungsvorrichtung des Kältemittels (9) in der ersten Einstellung sind, um Kalorien von der geothermischen Quelle (300) zu der aerothermischen Quelle (400) weiterzuleiten;
- einen dritten Funktionsmodus, in dem die Steuerungsvorrichtung des Kältemittels (9) in der zweiten Einstellung ist, wobei die erste Umschaltvorrichtung (10, 11, 19) und die zweite Umschaltvorrichtung (12, 13, 20) in der ersten Einstellung sind, um Kalorien von der Wärmelast (200) zu der geothermischen Quelle (300) und/oder der aerothermischen Quelle (400) weiterzuleiten;
- einen vierten Funktionsmodus, in dem die Steuerungsvorrichtung des Kältemittels (9), die erste Umschaltvorrichtung (10, 11, 19) und die zweite Umschaltvorrichtung (12, 13, 20) in der zweiten Einstellung sind, um Kalorien von der aerothermischen Quelle (400) zu der geothermischen Quelle (300) weiterzuleiten.

3. Thermodynamische Maschine nach dem vorhergehenden Anspruch, umfassend:
- einen ersten Temperaturfühler (31), der eingerichtet ist, um die Temperatur (TGEO) am Eingang des mindestens einen Sekundärkreises des zweiten Wärmetauschers (3) zu messen;
- einen zweiten Temperaturfühler (41), der eingerichtet ist, um die Temperatur (TAIR) am Eingang des mindestens einen Sekundärkreises des dritten Wärmetauschers (4) zu messen;
wobei der erste Druckminderer (7) und der zweite Druckminderer (8) ein variables Öffnungsverhältnis haben, und wobei der Steuerkreis (500) eingerichtet ist, um das Öffnungsverhältnis des ersten Druckminderers (7) und das Öffnungsverhältnis des zweiten Druckminderers (8) zu kontrollieren und die Wärme- oder Kälteleistung, die über den zweiten Wärmetauscher (3) bzw. den dritten Wärmetauscher (4) übertragen wird, in Abhängigkeit von den Temperaturwerten (TGEO, TAIR), die am Eingang des mindestens einen Sekundärkreises des zweiten Wärmetauschers (3) und am Eingang des mindestens einen Sekundärkreises des dritten Wärmetauschers (4) gemessen werden, anzupassen.

4. Thermodynamische Maschine nach dem vorhergehenden Anspruch, **dadurch gekennzeichnet, dass** der Steuerkreis (500) eingerichtet ist, um den ersten Druckminderer (7) in dem ersten Funktionsmodus zu schließen, wenn der Steuerkreis (500) feststellt, dass der Temperaturwert (TGEO) am Eingang des mindestens einen Sekundärkreises des zweiten Wärmetauschers (3) niedriger als der Temperaturwert (TAIR) am Eingang des mindestens einen Sekundärkreistes des dritten Wärmetauschers (4) ist.

5. Thermodynamische Maschine nach dem vorhergehenden Anspruch, **dadurch gekennzeichnet, dass** der Steuerkreis (500) eingerichtet ist, um den zweiten Druckminderer (8) im ersten Funktionsmodus zu schließen, wenn der Steuerkreis (500) feststellt, dass der Temperaturwert (TGEO) am Eingang des mindestens einen Sekundärkreises des zweiten Wärmetauschers (3) höher als der Temperaturwert (TAIR) am Eingang des mindestens einen Sekundärkreises des dritten Wärmetauschers (4) ist.

6. Thermodynamische Maschine nach einem der Ansprüche 3 bis 5, **dadurch gekennzeichnet, dass** der Steuerkreis (500) eingerichtet ist, um den ersten Druckminderer (7) im dritten Funktionsmodus zu schließen, wenn der Steuerkreis (500) feststellt, dass der Temperaturwert (TGEO) am Eingang des mindestens einen Sekundärkreises des zweiten Wärmetauschers (3) höher als der Temperaturwert (TAIR) am Eingang des mindestens einen Sekundärkreises des dritten Wärmetauschers (4) ist.

7. Thermodynamische Maschine nach dem vorhergehenden Anspruch, **dadurch gekennzeichnet, dass** der Steuerkreis (500) eingerichtet ist, um den zweiten Druckminderer (8) im dritten Funktionsmodus zu schließen, wenn der Steuerkreis (500) feststellt, dass der Temperaturwert (TGEO) am Eingang des mindestens einen Sekundärkreises des zweiten Wärmetauschers (3) niedriger als der Temperaturwert (TAIR) am Eingang des mindestens einen Sekundärkreises des dritten Wärmetauschers (4) ist.

8. Thermodynamische Maschine nach einem der Ansprüche 2 bis 7, umfassend Mittel zum Messen der Temperatur der geothermischen Quelle (300), und wobei der Steuerkreis (500) ein Prognosemodell der Temperatur der geothermischen Quelle (300) im zeitlichen Verlauf umfasst, wobei der Steuerkreis (500) eingerichtet ist, um den zweiten Funktionsmodus oder den vierten Funktionsmodus zu aktivieren, wenn der Steuerkreis (500) feststellt, dass die Temperatur der geothermischen Quelle (300) von der Temperatur des Prognosemodells über einen Schwellenwert hinaus abweicht.

9. Thermodynamische Maschine nach dem vorhergehenden Anspruch, bei der die Mittel zum Messen der Temperatur der geothermischen Quelle (300) von dem ersten Temperaturfühler (31) und einer Schätzeinrichtung gebildet sind, die eingerichtet ist, um die Temperatur der geothermischen Quelle auf Basis der Temperatur (TGEO) am Eingang des mindestens einen Sekundärkreises des zweiten Wärmetauschers (3) zu schätzen.

10. Thermodynamische Maschine nach Anspruch 8, bei der die Mittel zum Messen der Temperatur der geothermischen Quelle (300) von einem dritten Temperaturfühler (303) gebildet sind, der dazu bestimmt ist, im Unterboden in der Nähe der geothermischen Quelle installiert zu werden.

11. Thermodynamische Maschine nach einem der Ansprüche 8 bis 9, bei der der Steuerkreis (500) eingerichtet ist, um den zweiten Funktionsmodus nur dann zu aktivieren, wenn der Steuerkreis (500) feststellt, dass die Temperatur (TAIR) am Eingang des mindestens einen Sekundärkreises des dritten Wärmetauschers (4) niedriger als die Temperatur (TGEO) am Eingang des mindestens einen Sekundärkreises des zweiten Wärmetauschers (3) ist, und/oder um den vierten Funktionsmodus nur dann zu aktivieren, wenn der Steuerkreis (500) feststellt, dass die Temperatur (TAIR) am Eingang des mindestens einen Sekundärkreises des dritten Wärmetauschers (4) höher als die Temperatur (TGEO) am Eingang des mindestens einen Sekundärkreises des zweiten Wärmetauschers (3) ist.

12. Thermodynamische Maschine nach einem der vorhergehenden Ansprüche, **dadurch gekennzeichnet, dass** sie einen zweiten Kältemittelkreislauf (101), der sich vom ersten Kältemittelkreislauf (1) unterscheidet, in dem ein zweites Kältemittel zirkuliert, wobei der zweiten Kältemittelkreislauf (101) den ersten Wärmetauscher (2), den zweiten Wärmetauscher (3) und den dritten Wärmetauscher (4) verbindet, wobei der zweite Kältemittelkreislauf (101) eine zweite Steuerungsvorrichtung des Kältemittels (109), einen Kompressor (105), einen ersten Druckminderer (107) und einen zweiten Druckminderer (108), einen ersten Verbindungsknoten (115), einen zweiten Verbindungsknoten (116), einen dritten Verbindungsknoten (117), einen vierten Verbindungsknoten (118), eine erste Umschaltvorrichtung (110, 111, 119), eine zweite Umschaltvorrichtung (112, 113, 120) umfasst, die auf ähnliche Weise wie im ersten Kältemittelkreislauf (1) angeordnet sind.

13. Thermodynamische Maschine nach der Kombination der Ansprüche 2 und 12, **dadurch gekennzeichnet, dass** der Steuerkreis (500) eingerichtet ist, um selektiv für den zweiten Kältemittelkreislauf (101) erste, zweite, dritte und vierte Funktionsmodi ähnlich den ersten, zweiten, dritten und vierten Funktionsmodi des ersten Kältemittelkreislaufs (1) zu definieren.

14. Thermodynamische Maschine nach dem vorhergehenden Anspruch, **dadurch gekennzeichnet, dass** der Steuerkreis (500) eingerichtet ist, um eine Einstellung zu definieren, in der der erste Kältemittelkreislauf (1) im ersten Funktionsmodus ist, wobei der zweite Druckminderer (8) des ersten Kältemittelkreislaufs (1) geschlossen gehalten wird, und der zweite Kältemittelkreislauf (101) im zweiten Funktionsmodus ist.

15. Thermodynamische Maschine nach einem der Ansprüche 13 und 14, **dadurch gekennzeichnet, dass** der Steuerkreis (500) eingerichtet ist, um eine Einstellung zu definieren, in der der erste Kältemittelkreislauf (1) im ersten Funktionsmodus ist, wobei der erste Druckminderer (7) des ersten Kältemittelkreislaufs (1) geschlossen gehalten wird, und der zweite Kältemittelkreislauf (101) im vierten Funktionsmodus ist.

16. Thermodynamische Maschine nach einem der Ansprüche 13 bis 15, **dadurch gekennzeichnet, dass** der Steuerkreis (500) eingerichtet ist, um eine Einstellung zu definieren, in der der erste Kältemittelkreislauf (1) im dritten Funktionsmodus ist, wobei der erste Druckminderer (7) des ersten Kältemittelkreislaufs (1) geschlossen gehalten wird, und der zweite Kältemittelkreislauf (101) im zweiten Funktionsmodus ist.

17. Thermodynamische Maschine nach einem der Ansprüche 13 bis 16, **dadurch gekennzeichnet, dass** der Steuerkreis (500) eingerichtet ist, um eine Einstellung zu definieren, in der der erste Kältemittelkreislauf (1) im dritten Funktionsmodus ist, wobei der zweite Druckminderer (8) des ersten Kältemittelkreislaufs (1) geschlossen gehalten wird, und der zweite Kältemittelkreislauf (101) im vierten Funktionsmodus ist.

18. Funktionsverfahren einer thermodynamischen Maschine, umfassend die folgenden Schritte:
- Bereitstellen einer thermodynamischen Maschine nach einem der Ansprüche 1 bis 11;
- Betreiben der thermodynamischen Maschine in einem Funktionsmodus, ausgewählt aus:
i) einer parallelen Montage des dritten Wärmetauschers (4) und des zweiten Wärmetauschers (3), wobei der dritte Wärmetauscher (4) und der zweite Wärmetauscher (3) als Verdampfer funktionieren, zwischen dem Ausgang des ersten Wärmetauschers (2), der als Kältemittelkondensator funktioniert, und dem Eingang des Kompressors (5),
ii) einer seriellen Montage des dritten Wärmetauschers (4), der als Kältemittelkondensator funktioniert, und des zweiten Wärmetauschers (3), der als Kältemittelverdampfer funktioniert, zwischen dem Ausgang des Kompressors (5) und dem Eingang des Kompressors (5),
iii) einer parallelen Montage des dritten Wärmetauschers (4) und des zweiten Wärmetauschers (3), wobei der dritte Wärmetauscher (4) und der zweite Wärmetauscher (3) als Kältemittelkondensator funktionieren, zwischen dem Ausgang des Kompressors (5) und dem Eingang des ersten Wärmetauschers (2), der als Kältemittelverdampfer funktioniert,
iv) einer seriellen Montage des zweiten Wärmetauschers (3), der als Kältemittelkondensator funktioniert, und des dritten Wärmetauschers (4), der als Kältemittelverdampfer funktioniert, zwischen dem Ausgang des Kompressors (5) und dem Eingang des Kompressors (5).

19. Funktionsverfahren einer thermodynamischen Maschine, umfassend die folgenden Schritte:
- Bereitstellen einer thermodynamischen Maschine nach einem der Ansprüche 12 bis 19;
- Betreiben der thermodynamischen Maschine in mindestens einem der Funktionsmodi, ausgewählt aus:
i) der erste Wärmetauscher (2) kondensiert das erste Kältemittel, der zweite Wärmetauscher (3) verdampft das erste Kältemittel und das zweite Kältemittel, der dritte Wärmetauscher (4) kondensiert das zweite Kältemittel, das erste Kältemittel strömt nicht durch den dritten Wärmetauscher (4), und das zweite Kältemittel strömt nicht durch den ersten Wärmetauscher (2);
ii) der erste Wärmetauscher (2) kondensiert das erste Kältemittel, der dritte Wärmetauscher (4) verdampft das erste Kältemittel und das zweite Kältemittel, der zweite Wärmetauscher (3) kondensiert das zweite Kältemittel, das erste Kältemittel strömt nicht durch den zweiten Wärmetauscher (3), und das zweite Kältemittel strömt nicht durch den ersten Wärmetauscher (2);
iii) der erste Wärmetauscher (2) verdampft das erste Kältemittel, der dritte Wärmetauscher (4) kondensiert das erste Kältemittel und das zweite Kältemittel, der zweite Wärmetauscher (3) verdampft das zweite Kältemittel, das erste Kältemittel strömt nicht durch den zweiten Wärmetauscher (3), und das zweite Kältemittel strömt nicht durch den ersten Wärmetauscher (2);
iv) der erste Wärmetauscher (2) verdampft das erste Kältemittel, der zweite Wärmetauscher (3) kondensiert das erste Kältemittel und das zweite Kältemittel, der dritte Wärmetauscher (4) verdampft das zweite Kältemittel, das erste Kältemittel strömt nicht durch den dritten Wärmetauscher (4), und das zweite Kältemittel strömt nicht durch den ersten Wärmetauscher (2).

## Claims

1. Thermodynamic machine, comprising:
- a first heat exchanger (2) designed to operate in conjunction with a thermal load (200) and having at least a primary circuit and at least a secondary circuit;
- a second heat exchanger (3) designed to operate in conjunction with a geothermal source (300) and having at least a primary circuit and at least a secondary circuit;
- a third heat exchanger (4) designed to operate in conjunction with an aerothermal source (400) and having at least a primary circuit and at least a secondary circuit;
- a compressor (5) and first and second pressure reducers (7, 8);
- at least a first refrigerant circuit (1) inside which at least a refrigerant flows, the at least a first refrigerant circuit (1) connecting the primary circuits of the first heat exchanger (2), of the second heat exchanger (3) and of the third heat exchanger (4), the compressor (5) and first and second pressure reducers (7, 8);
wherein the at least a first refrigerant circuit (1) comprises:
- a first control device of the refrigerant (9) and a first switching device (10, 11, 19);
- a first connection node (15) connecting the output of the compressor (5) to the first control device of the refrigerant (9) and to the first switching device (10, 11, 19);
- a second connection node (16) connecting a second input/output of the first heat exchanger (2) to a first terminal of the first pressure reducer (7);
- a third connection node (17) connecting a second input/output of the second heat exchanger (3) to a second terminal of the first pressure reducer (7);
- a fourth connection node (18) connecting the input of the compressor (5) to the control device of the refrigerant (9);
wherein the first control device of the refrigerant (9) is configured to selectively define a first configuration or a second configuration,
- the first configuration connecting the output of the compressor (5) with a first input/output of the first heat exchanger (2) and connecting the input of the compressor (5) with a first input/output of the second heat exchanger (3) and
- the second configuration connecting the output of the compressor (5) with the first input/output of the second heat exchanger (3) and connecting the input of the compressor (5) with the first input/output of the first heat exchanger (2); wherein the first switching device (10, 11, 19) is configured to selectively define a first configuration or a second configuration, the first configuration connecting the first connection node (15) to the first input/output of the third heat exchanger (4), the second configuration connecting the first input/output of the third heat exchanger (4) to the fourth connection node (18);
**characterised in that**:
- the at least a first refrigerant circuit (1) further comprises a second switching device (12, 13, 20);
- the second connection node (16) connects the second input/output of the first heat exchanger (2) to the first terminal of the first pressure reducer (7) and to the second switching device (12, 13, 20);
- the third connection node (17) connects the second input/output of the second heat exchanger (3) to the second terminal of the first pressure reducer (7) and to the second switching device (12, 13, 20);
- the fourth connection node (18) connects the input of the compressor (5) to the control device of the refrigerant (9) and to the first switching device (10, 11, 19);
- the first configuration of the first switching device (10, 11, 19) prevents flow of the refrigerant with the fourth connection node (18), and the second configuration of the first switching device (10, 11, 19) prevents flow of the refrigerant with the first connection node (15); and **in that**
- the second switching device (12, 13, 20) is configured to selectively define a first configuration or a second configuration, the first configuration connecting the second connection node (16) to the second input/output of the third heat exchanger (4) via the second pressure reducer (8) and preventing flow of the refrigerant with the third connection node (17), the second configuration connecting the second input/output of the third heat exchanger (4) to the third connection node (17) via the second pressure reducer (8) and preventing flow of the refrigerant with the second connection node (16).

2. Thermodynamic machine according to the foregoing claim, **characterised in that** it comprises a control circuit (500) configured to selectively define:
- a first operating mode in which the first switching device (10, 11, 19) is in the second configuration, the second switching device (12, 13, 20) and the control device of the refrigerant (9) being in the first configuration to transfer calories from the geothermal source and/or from the aerothermal source (400) to the thermal load (200);
- a second operating mode in which the second switching device (12, 13, 20) is in the second configuration, the first switching device (10, 11, 19) and the control device of the refrigerant (9) being in the first configuration to transfer calories from the geothermal source (300) to the aerothermal source (400);
- a third operating mode in which the control device of the refrigerant (9) is in the second configuration, the first switching device (10, 11, 19) and the second switching device (12, 13, 20) being in the first configuration to transfer calories from the thermal load (200) to the geothermal source (300) and/or the aerothermal source (400);
- a fourth operating mode in which the control device of the refrigerant (9), the first switching device (10, 11, 19) and the second switching device (12, 13, 20) are in the second configuration to transfer calories from the aerothermal source (400) to the geothermal source (300).

3. Thermodynamic machine according to the foregoing claim, comprising:
- a first temperature sensor (31) configured to measure the temperature (TGEO) at the input of the at least a secondary circuit of the second heat exchanger (3);
- a second temperature sensor (41) configured to measure the temperature (TAIR) at the input of the at least a secondary circuit of the third heat exchanger (4);
wherein the first pressure reducer (7) and the second pressure reducer (8) are at a variable degree of opening and wherein the control circuit (500) is configured to control the degree of opening of the first pressure reducer (7) and the degree of opening of the second pressure reducer (8) and to adjust the heating or cooling power respectively transmitted through the second heat exchanger (3) and the third heat exchanger (4) according to the temperature value (TGEO, TAIR) measured at the input of the at least a secondary circuit of the second heat exchanger (3) and at the input of the at least a secondary circuit of the third heat exchanger (4).

4. Thermodynamic machine according to the foregoing claim, **characterised in that** the control circuit (500) is configured to close the first pressure reducer (7) in the first operating mode when the control circuit (500) ascertains that the temperature value (TGEO) at the input of the at least a secondary circuit of the second heat exchanger (3) is lower than the temperature value (TAIR) at the input of the at least a secondary circuit of the third heat exchanger (4).

5. Thermodynamic machine according to the foregoing claim, **characterised in that** the control circuit (500) is configured to close the second pressure reducer (8) in the first operating mode when the control circuit (500) ascertains that the temperature value (TGEO) at the input of the at least a secondary circuit of the second heat exchanger (3) is higher than the temperature value (TAIR) at the input of the at least a secondary circuit of the third heat exchanger (4).

6. Thermodynamic machine according to one of claims 3 to 5, **characterised in that** the control circuit (500) is configured to close the first pressure reducer (7) in the third operating mode when the control circuit (500) ascertains that the temperature value (TGEO) at the input of the at least a secondary circuit of the second heat exchanger (3) is higher than the temperature value (TAIR) at the input of the at least a secondary circuit of the third heat exchanger (4).

7. Thermodynamic machine according to the foregoing claim, **characterised in that** the control circuit (500) is configured to close the second pressure reducer (8) in the third operating mode when the control circuit (500) ascertains that the temperature value (TGEO) at the input of the at least a secondary circuit of the second heat exchanger (3) is lower than the temperature value (TAIR) at the input of the at least a secondary circuit of the third heat exchanger (4).

8. Thermodynamic machine according to one of claims 2 to 7, comprising means for measuring the temperature of the geothermal source (300) and wherein the control circuit (500) comprises a forecasting model of the temperature of the geothermal source (300) over time, the control circuit (500) being configured to activate the second operating mode or the fourth operating mode when the control circuit (500) ascertains that the temperature of the geothermal source (300) deviates from the temperature of the forecasting model beyond a threshold value.

9. Thermodynamic machine according to the foregoing claim wherein the means for measuring the temperature of the geothermal source (300) are formed by the first temperature sensor (31) and an estimation device configured to estimate the temperature of the geothermal source from the temperature (TGEO) at the input of the at least a secondary circuit of the second heat exchanger (3).

10. Thermodynamic machine according to the claim 8 wherein the means for measuring the temperature of the geothermal source (300) are formed by a third temperature sensor (303) designed to be installed in the subsoil close to the geothermal source.

11. Thermodynamic machine according to one of claims 8 to 9, wherein the control circuit (500) is configured to activate the second operating mode only when the control circuit (500) ascertains that the temperature (TAIR) at the input of the at least a secondary circuit of the third heat exchanger (4) is lower than the temperature (TGEO) at the input of the at least a secondary circuit of the second heat exchanger (3) and/or to activate the fourth operating mode only when the control circuit (500) ascertains that the temperature (TAIR) at the input of the at least a secondary circuit of the third heat exchanger (4) is higher than the temperature (TGEO) at the input of the at least a secondary circuit of the second heat exchanger (3).

12. Thermodynamic machine according to one of the foregoing claims, **characterised in that** it comprises a second refrigerant circuit (101) distinct from the first refrigerant circuit (1) inside which a second refrigerant flows, the second refrigerant circuit (101) connecting the first heat exchanger (2), the second heat exchanger (3) and the third heat exchanger (4), the second refrigerant circuit (101) having a second control device of the refrigerant (109), a compressor (105), a first pressure reducer (107) and a second pressure reducer (108), a first connection node (115), a second connection node (116), a third connection node (117), a fourth connection node (118), a first switching device (110, 111, 119), and a second switching device (112, 113, 120) arranged in similar manner to the first refrigerant circuit (1).

13. Thermodynamic machine according to the combination of claims 2 and 12, **characterised in that** the control circuit (500) is configured to selectively define for the second refrigerant circuit (101) first, second, third and fourth operating modes similar to the first, second, third and fourth operating modes of the first refrigerant circuit (1).

14. Thermodynamic machine according to the foregoing claim, **characterised in that** the control circuit (500) is configured to define a configuration in which the first refrigerant circuit (1) is in the first operating mode, the second pressure reducer (8) of the first refrigerant circuit (1) being kept closed, and the second refrigerant circuit (101) is in the second operating mode.

15. Thermodynamic machine according to one of claims 13 and 14, **characterised in that** the control circuit (500) is configured to define a configuration in which the first refrigerant circuit (1) is in the first operating mode, the first pressure reducer (7) of the first refrigerant circuit (1) being kept closed, and the second refrigerant circuit (101) is in the fourth operating mode.

16. Thermodynamic machine according to any one of claims 13 to 15, **characterised in that** the control circuit (500) is configured to define a configuration in which the first refrigerant circuit (1) is in the third operating mode, the first pressure reducer (7) of the first refrigerant circuit (1) being kept closed, and the second refrigerant circuit (101) is in the second operating mode.

17. Thermodynamic machine according to any one of claims 13 to 16, **characterised in that** the control circuit (500) is configured to define a configuration in which the first refrigerant circuit (1) is in the third operating mode, the second pressure reducer (8) of the first refrigerant circuit (1) being kept closed, and the second refrigerant circuit (101) is in the fourth operating mode.

18. Operating method of a thermodynamic machine comprising the steps:
- Providing a thermodynamic machine according to one of claims 1 to 11;
- Making the thermodynamic machine operate in an operating mode chosen from:
i) parallel connection of the third heat exchanger (4) and of the second heat exchanger (3), the third heat exchanger (4) and the second heat exchanger (3) operating as evaporators, between the output of the first heat exchanger (2) that operates as refrigerant condenser and the input of the compressor (5),
ii) series connection of the third heat exchanger (4) that operates as refrigerant condenser, and of the second heat exchanger (3) that operates as refrigerant evaporator, between the output of the compressor (5) and the input of the compressor (5),
iii) parallel connection of the third heat exchanger (4) and of the second heat exchanger (3), the third heat exchanger (4) and the second heat exchanger (3) operating as refrigerant condensers, between the output of the compressor (5) and the input of the first heat exchanger (2) that operates as refrigerant evaporator,
iv) series connection of the second heat exchanger (3) that operates as refrigerant condenser, and of the third heat exchanger (4) that operates as refrigerant evaporator, between the output of the compressor (5) and the input of the compressor (5).

19. Operating method of a thermodynamic machine comprising the steps:
- Providing a thermodynamic machine according to one of claims 12 to 19;
- Making the thermodynamic machine operate in an operating mode chosen from:
i) the first heat exchanger (2) condenses the first refrigerant, the second heat exchanger (3) vaporises the first refrigerant and the second refrigerant, the third heat exchanger (4) condenses the second refrigerant, the first refrigerant does not flow through the third heat exchanger (4) and the second refrigerant does not flow through the first heat exchanger (2);
ii) the first heat exchanger (2) condenses the first refrigerant, the third heat exchanger (4) vaporises the first refrigerant and the second refrigerant, the second heat exchanger (3) condenses the second refrigerant, the first refrigerant does not flow through the second heat exchanger (3) and the second refrigerant does not flow through the first heat exchanger (2);
iii) the first heat exchanger (2) vaporises the first refrigerant, the third heat exchanger (4) condenses the first refrigerant and the second refrigerant, the second heat exchanger (3) vaporises the second refrigerant, the first refrigerant does not flow through the second heat exchanger (3) and the second refrigerant does not flow through the first heat exchanger (2);
iv) the first heat exchanger (2) vaporises the first refrigerant, the second heat exchanger (3) condenses the first refrigerant and the second refrigerant, the third heat exchanger (4) vaporises the second refrigerant, the first refrigerant does not flow through the third heat exchanger (4) and the second refrigerant does not flow through the first heat exchanger (2).
